# EUROPEAN PATENT APPLICATION

(11) **EP 4 827 055 A1**
(43) Date of publication of application: **21.10.2026**
(21) Application number: 23961057.9
(22) Date of filing: 11.12.2023
(51) Int. Cl.: H04L 27/26

(54) **FREQUENCY OFFSET CALIBRATION METHODS AND APPARATUSES, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: WANG, Ke, Dongguan, Guangdong 523860 (CN); XU, Weijie, Dongguan, Guangdong 523860 (CN); ZHANG, Jinyu, Dongguan, Guangdong 523860 (CN)
(74) Representative: Novagraaf Technologies
(86) International application number: PCT/CN2023/137979
(87) International publication number: WO 2025/123191

(57) **Abstract**

The present disclosure relates to the field of communications. Disclosed are frequency offset calibration methods and apparatuses, and a device and a medium. A method comprises: generating a frequency offset calibration signal, wherein the frequency offset calibration signal comprises at least two sub-signals used for frequency offset calibration, the at least two sub-signals are each a part of the frequency offset calibration signal, and the at least two sub-signals are the same; and transmitting the frequency offset calibration signal to a second device. In the method provided in the present disclosure, a receiving end receives a signal and then performs frequency offset calibration on the received signal on the basis of at least two sub-signals used for frequency offset calibration, without needing a large number of computing resources; and the method is simple, and applicable to an ambient IoT device.

## Description

### TECHNICAL FIELD

The present disclosure relates to the field of communications, and particularly to a method and apparatus for calibrating frequency offset, and a device and medium thereof.

### RELATED ART

To save power consumption in ambient power enabled Internet of things (abbreviated as ambient IoT) devices, crystal oscillators are typically not used as oscillators, but simpler and lower-power oscillators are employed instead. However, the clock accuracy and frequency accuracy of these oscillators are often poor, resulting in significant frequency offsets during the operation of the ambient IoT devices, which may affect subsequent communication of the ambient IoT devices. Therefore, frequency offset calibration is necessary.

Due to the simplicity of the radio frequency (RF) and baseband circuits in the ambient IoT devices, it is difficult to use the frequency offset calibration methods in the related art.

How to design a frequency offset calibration method for ambient IoT devices is an unresolved issue.

### SUMMARY

The embodiments of the present disclosure provide a method and apparatus for calibrating frequency offset, and a device and medium thereof. The technical solution is as follows.

According to an aspect of the present disclosure, a method for calibrating frequency offset is provided, which is performed by a first device and includes:
generating a frequency offset calibration signal, wherein the frequency offset calibration signal includes at least two sub-signals for frequency offset calibration; and each of the at least two sub-signals is a part of the frequency offset calibration signal, and the at least two sub-signals are the same; and
transmitting the frequency offset calibration signal to a second device.

According to an aspect of the present disclosure, a method for calibrating frequency offset is provided, which is performed by a second device and includes:
receiving a frequency offset calibration signal transmitted by a first device, wherein the frequency offset calibration signal includes at least two sub-signals for frequency offset calibration; and each of the at least two sub-signals is a part of the frequency offset calibration signal, and the at least two sub-signals are the same when being transmitted.

According to an aspect of the present disclosure, an apparatus for calibrating frequency offset is provided, which includes:
a generation module, configured to generate a frequency offset calibration signal, wherein the frequency offset calibration signal includes at least two sub-signals for frequency offset calibration; and each of the at least two sub-signals is a part of the frequency offset calibration signal, and the at least two sub-signals are the same; and
a transmitting module, configured to transmit the frequency offset calibration signal to a second device.

According to an aspect of the present disclosure, an apparatus for calibrating frequency offset is provided, which includes:
a receiving module, configured to receive a frequency offset calibration signal transmitted by a first device, wherein the frequency offset calibration signal includes at least two sub-signals for frequency offset calibration; and each of the at least two sub-signals is a part of the frequency offset calibration signal, and the at least two sub-signals are the same when being transmitted.

According to an aspect of the present disclosure, a computer-readable storage medium is provided, in which a computer program is stored. The computer program is configured to be executed by a processor to implement the aforementioned method for calibrating frequency offset.

According to an aspect of the present disclosure, a chip is provided, which includes a programmable logic circuit and/or one or more program instructions. The chip, when operates, is configured to implement the aforementioned method for calibrating frequency offset.

According to an aspect of the present disclosure, a computer program product or computer program is provided, which includes one or more computer instructions stored in a computer-readable storage medium. The one or more computer instructions, when read from the computer-readable storage medium and executed by a processor, cause the processor to perform the aforementioned method for calibrating frequency offset.

The technical solution according to the embodiments of the present disclosure at least includes the following beneficial effects.

By transmitting at least two repeated signals for frequency offset calibration, this method can achieve frequency offset calibration without requiring a large amount of storage or computing resources, nor does it require complex calculations. Therefore, this method is suitable for devices with simple structures, such as ambient IoT devices.

### BRIEF DESCRIPTION OF DRAWINGS

For clearer descriptions of the technical solutions according to the embodiments of the present disclosure, the following briefly describes the accompanying drawings required for describing the embodiments. Apparently, the accompanying drawings in the following description illustrate merely some embodiments of the present disclosure, and those of ordinary skill in the art may still derive other drawings from these accompanying drawings without creative efforts.
FIG. 1 is a schematic diagram of a communication system provided by the related art.
FIG. 2 is a schematic diagram of RF power harvesting provided by the related art.
FIG. 3 is a schematic diagram of a backscatter communication process provided by the related art.
FIG. 4 is a schematic diagram of resistive load modulation provided by the related art.
FIG. 5 is a schematic diagram of encoding schemes provided by the related art.
FIG. 6 is a structural schematic diagram of a communication system according to an exemplary embodiment of the present disclosure.
FIG. 7 is a flowchart of a method for calibrating frequency offset according to an exemplary embodiment of the present disclosure.
FIG. 8 is a schematic diagram of a method for calibrating frequency offset according to an exemplary embodiment of the present disclosure.
FIG. 9 is a flowchart of a method for calibrating frequency offset according to an exemplary embodiment of the present disclosure.
FIG. 10 is a schematic diagram of a method for calibrating frequency offset according to an exemplary embodiment of the present disclosure.
FIG. 11 is a schematic diagram of a method for calibrating frequency offset according to an exemplary embodiment of the present disclosure.
FIG. 12 is a schematic diagram of a method for calibrating frequency offset according to an exemplary embodiment of the present disclosure.
FIG. 13 is a schematic diagram of a method for calibrating frequency offset according to an exemplary embodiment of the present disclosure.
FIG. 14 is a schematic diagram of a method for calibrating frequency offset according to an exemplary embodiment of the present disclosure.
FIG. 15 is a schematic diagram of a method for calibrating frequency offset according to an exemplary embodiment of the present disclosure.
FIG. 16 is a schematic diagram of a method for calibrating frequency offset according to an exemplary embodiment of the present disclosure.
FIG. 17 is a schematic diagram of a method for calibrating frequency offset according to an exemplary embodiment of the present disclosure.
FIG. 18 is a schematic diagram of a method for calibrating frequency offset according to an exemplary embodiment of the present disclosure.
FIG. 19 is a schematic diagram of a method for calibrating frequency offset according to an exemplary embodiment of the present disclosure.
FIG. 20 is a schematic diagram of a method for calibrating frequency offset according to an exemplary embodiment of the present disclosure.
FIG. 21 is a schematic diagram of a method for calibrating frequency offset according to an exemplary embodiment of the present disclosure.
FIG. 22 is an overall flowchart of a method for calibrating frequency offset according to an exemplary embodiment of the present disclosure.
FIG. 23 is an overall flowchart of a method for calibrating frequency offset according to an exemplary embodiment of the present disclosure.
FIG. 24 is a structural block diagram of an apparatus for calibrating frequency offset according to some illustrative embodiments of the present disclosure.
FIG. 25 is a structural block diagram of an apparatus for calibrating frequency offset according to some illustrative embodiments of the present disclosure.
FIG. 26 is a structural schematic diagram of a wireless communication device according to some exemplary embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, the exemplary embodiments are described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present disclosure. Instead, they are merely examples of devices and methods consistent with some aspects of the present disclosure as detailed in the accompanying claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, and such information should not be limited by these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context.

Generally, unless otherwise explicitly defined in this document, all terms used in the claims are to be interpreted according to their ordinary meanings in the technical field. Unless otherwise explicitly stated, all references to "an element," "an apparatus," "a component," "a device," "a step," etc. are to be construed broadly as referring to at least one instance of the element, apparatus, component, device, step, etc. Unless explicitly stated, the steps of any method disclosed in this document do not necessarily have to be performed in the exact order disclosed.

The terminal devices involved in the embodiments of the present disclosure may be active devices, which refer to devices with their own power supply and the capability to actively generate and transmit signals, such as mobile phones, computers, smart watches, smart bracelets, etc.; they may also be passive devices, which refer to devices that do not require power supply or have the capabilities to operate by receiving energy from other devices, and may be referred to as zero-power devices, zero-power terminals, low-power devices, low-power terminals, etc.; they may also be devices that obtain energy from the environment, which may be referred to as ambient IoT devices; they may also be devices deployed at fixed locations, which may be referred to as zero-power stations, low-power stations, etc., or terminals with a low-power wake-up receiver (LP-WUR) in cellular systems, or stations (STAs) with a wake-up receiver (WUR) in wireless fidelity (Wi-Fi) systems.

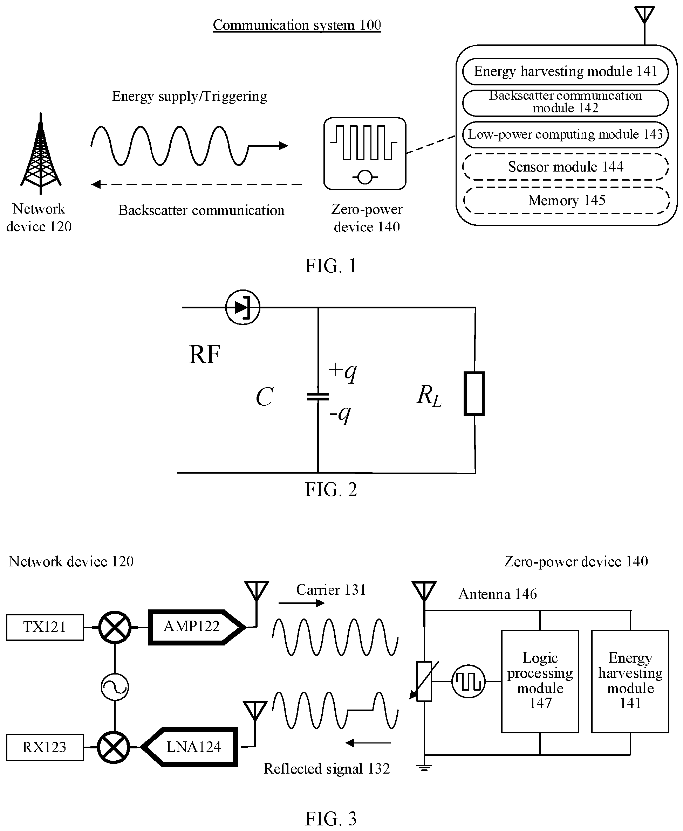

FIG. 1 is a schematic diagram of a communication system 100 provided by the related art, which includes a network device 120 and a zero-power device 140.

The network device 120 is configured to transmit wireless energy supply signals and downlink communication signals to the zero-power device 140, and receive backscatter signals from the zero-power device 140. The zero-power device 140 may also referred to as an ambient IoT device or an AMP device, which includes an energy harvesting module 141, a backscatter communication module 142, and a low-power computing module 143. The energy harvesting module 141 is configured to harvest energy carried by radio waves (radio signals) in space to drive the low-power computing module 143 of the zero-power device 140 and to cause the backscatter communication module 142 to implement backscatter communication. The zero-power device 140, upon harvesting energy, may receive control signals from the network device 120 and transmit data to the network device 120 in a backscatter manner based on the control signals. The transmitted data may be data stored in the zero-power device 140 (such as an identity identifier or pre-written information, e.g., a production date, a brand, a manufacturer of a product, etc.).

The zero-power device 140 may further include a sensor module 144 and a memory 145. The sensor module 144 may include various types of sensors. The zero-power device 140 may report data captured by various sensors based on a zero-power mechanism. The memory 145 is configured to store some basic information (such as item identifiers) or acquire sensing data such as ambient temperature or ambient humidity.

Since the zero-power device 140 does not require a battery, and the low-power computing module 143 is configured to implement simple operations such as signal demodulation, decoding/encoding, and modulation, a zero-power module merely requires an extremely simple hardware design, such that the zero-power device 140 is produced at a low cost and has a compact size.

The network device 120 includes, but is not limited to: a cellular network device, such as a 5^{th} generation (5G) or 6^{th} generation (6G) network device and a 5G/6G base station device; and a Wi-Fi or wireless local area network (WLAN) network device, such as an access point (AP), a router, a mobile AP, or the like. The mobile AP is, for example, a mobile phone.

The zero-power device 140 includes, but is not limited to: a handheld device, a wearable device, a vehicle-mounted device, an IoT device, and the like. The zero-power device 140 may be at least one of: a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

It should be noted that a zero-power device may also be referred to as at least one of: an ultra-low-power device, a low-power device, a passive IoT device, an ambient IoT, or an A-IoT device. The embodiments of the present disclosure only use the zero-power device as an example for illustration, but this is not a limitation. Optionally, the first device and/or the second device in the embodiments of the present disclosure may be implemented as the aforementioned zero-power device, or as a device other than the zero-power device.

The communication technology implemented via zero-power devices may be referred to as zero-power communication technology, ultra-low-power communication technology, low-power communication technology, ambient IoT technology, passive IoT technology, or zero-power IoT technology.

The key technologies of zero-power communication are introduced hereinafter.

### ·RF Power Harvesting

FIG. 2 is a schematic diagram of RF power harvesting provided by the related art. The RF power harvesting is to harvest, based on the principle of electromagnetic induction, spatial electromagnetic wave energy using an RF module via electromagnetic induction and connection to a capacitor C and a load resistor R_{L} that are connected in parallel, to acquire energy required to drive the zero-power device for operation, for example, driving a low-power demodulation module, a modulation module, a sensor, memory read operations, or the like. Therefore, no traditional batteries are required for the zero-power device.

### ·Backscatter Communication

FIG. 3 is a schematic diagram of a backscatter communication process provided by the related art. The zero-power device 140 receives a wireless signal carrier 131 from a transmitter (TX) 121 of the network device 120 via an amplifier (AMP) 122, modulates the wireless signal carrier 131, loads to-be-transmitted information via a logic processing module 147, and harvests RF energy via the energy harvesting module 141. The zero-power device 140 radiates a modulated reflected signal 132 using an antenna 146. This information transmission process is referred to as backscatter communication. A receiver (RX) 123 of the network device 120 receives the modulated reflected signal 132 using a low-noise amplifier (LNA) 124. Backscatter and load modulation functions are inseparable. Load modulation is a process of modulation by adjusting and controlling circuit parameters of an oscillation circuit of the zero-power device 140 based on rhythms of data streams to cause parameters such as an impedance size of an electronic tag to change accordingly.

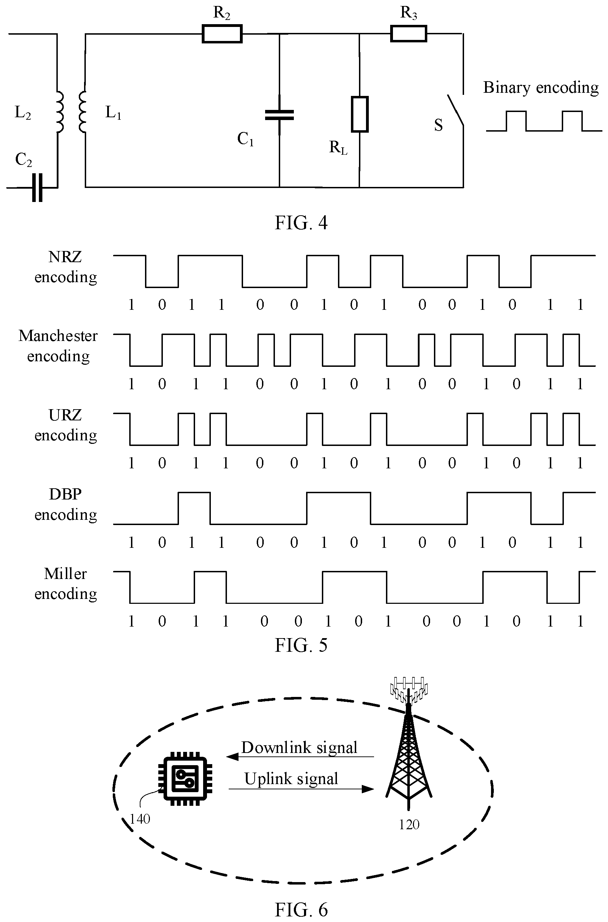

The load modulation technology mainly includes resistive load modulation and capacitive load modulation. FIG. 4 is a schematic diagram of resistive load modulation provided by the related art. In the resistive load modulation, a load resistor R_{L} is connected in parallel to a third resistor R₃, a switch S causes a circuit to be turned on or turned off based on binary-encoded control, turn-on or turn-off of the third resistor R₃ may cause a change of voltage on the circuit, the load resistor R_{L} is connected in parallel to a first capacitor C₁, the load resistor R_{L} is connected in series to a second resistor R₂, and the second resistor R₂ is connected in series to a first inductor L₁. The first inductor L₁ is coupled to a second inductor L₂, and the second inductor L₂ is connected in series to a second capacitor C₂. In this way, amplitude shift keying (ASK) may be implemented. That is, signal modulation and signal transmission are implemented by adjusting an amplitude of the backscatter signal from the zero-power device. Similarly, in the capacitive load modulation, a resonant frequency of a circuit may be changed based on turn-on or turn-off of a capacitor, such that frequency shift keying (FSK) is implemented. That is, signal modulation and signal transmission are implemented by adjusting an operating frequency of the backscatter signal from the zero-power device.

The zero-power device carries out information modulation on an incoming signal via load modulation, such that the backscatter communication process is implemented. The zero-power device has the following significant advantages: the device does not actively transmit any signal, and thus a complex RF chain is not required, such as a power amplifier (PA) and an RF filter are not required; the device is not required to actively generate any high-frequency signal, and thus a high-frequency crystal oscillator is not required; and the device carries out signal transmission by backscatter communication, without consuming energy of the device.

### ·Ultra-low-power active transmission technology

The zero-power device may also utilize an ultra-low-power active transmission technology. Unlike backscatter, when a zero-power device employs this technology for data transmission, it requires a relatively simple and low-power oscillator to generate an RF carrier, and then modulates the to-be-transmitted information onto the RF carrier. Based on current research, the power consumption of an ultra-low-power active transmitter may be as low as hundreds of microwatts, thus enabling ultra-low-power data transmission.

The encoding schemes for zero-power communication are introduced hereinafter.

FIG. 5 is a schematic diagram of encoding schemes provided by the related art. For data transmitted by electronic tags, a binary "1" and a binary "0" may be represented using different forms of encoding. A wireless RF identification (RFID) system generally adopts one of the following encoding schemes: non-return-to-zero (NRZ) encoding, Manchester encoding, unipolar return-to-zero (URZ) encoding, differential binary phase (DBP) encoding, Miller encoding, or differential encoding. That is, 0 and 1 may be represented using different pulse signals.
·NRZ encoding: in NRZ encoding, a binary "1" is represented by a high level, and a binary "0" is represented by a low level. NRZ encoding in FIG. 5 is a schematic diagram of levels of binary data 101100101001011 encoded by NRZ encoding.
·Manchester encoding: Manchester encoding is also referred to as split-phase encoding. In Manchester encoding, a binary value is represented by a transition (rising or falling) in a level in the middle of a bit period. A negative transition in the middle of the bit period represents a binary "1", and a positive transition in the middle of the bit period represents a binary "0". A data transmission error is defined as a condition where, upon simultaneous transmission of data bits with conflicting values from a plurality of electronic tags, the corresponding rising and falling edges within the received signal mutually cancel. This cancellation results in a continuous carrier signal being present for the full duration of the bit. In Manchester encoding, a state without any transition is absent within the bit period. A reader/writer may determine, based on the error, a specific location where a collision occurs. The Manchester encoding facilitates the detection of errors in data transmission, and is generally used for data transmission from an electronic tag to a reader/writer in a case where load modulation or backscatter modulation of carriers is adopted. Manchester encoding in FIG. 5 is a schematic diagram of levels of binary data 101100101001011 encoded by the Manchester encoding.
·URZ encoding: In URZ encoding, a binary "1" is represented by a high level in a leading half bit period of URZ encoding, and a binary "1" is represented by a low-level signal that lasts for a next entire bit period. URZ encoding in FIG. 5 is a schematic diagram of levels of binary data 101100101001011 encoded by URZ encoding.
·DBP encoding: In DBP encoding, a binary "0" is represented by the presence of any edge (transition) in a half bit period, and the absence of an edge represents a binary "1". In addition, levels are inverted at the beginning of each bit period. For a receiver, a bit clock is relatively easy to be reconstructed. DBP encoding in FIG. 5 is a schematic diagram of levels of binary data 101100101001011 encoded by DBP encoding.
·Miller encoding: In Miller encoding, a binary "1" is represented by the presence of any edge (transition) in a half bit period, and a binary "0" is represented by a constant level throughout a next bit period. In addition, a level transition occurs at the beginning of a bit period. For a receiver, a bit clock is relatively easy to be reconstructed. Miller encoding in FIG. 5 is a schematic diagram of levels of binary data 101100101001011 encoded by the Miller encoding.
·Differential encoding: In differential encoding, each binary "1" to be transmitted may cause a change in signal level, while for a binary "0," the signal level remains unchanged.

The classification of zero-power devices is introduced hereinafter.

Based on the energy source and usage mode of zero-power devices, they may be categorized into the following types.

### ·Passive zero-power device

The passive zero-power device does not require a built-in battery. As the zero-power device approaches to a network device, the zero-power device enters a near-field range formed by radiation of an antenna of the network device. In some embodiments, the network device is a reader/writer of an RFID system. Therefore, an antenna of the zero-power device generates an induced current via electromagnetic induction, and the induced current drives a low-power chip circuit of the zero-power device to implement demodulation of a forward link signal and modulation of a reverse link signal. For a backscatter link, the zero-power device carries out signal transmission via backscattering or ultra-low-power active transmission. The passive zero-power device does not require a built-in battery for driving for either the forward link or the reverse link, and thus, the passive zero-power device is a true zero-power device. The passive zero-power device does not require any battery, and an RF circuit and a baseband circuit of the passive zero-power device are very simple. For example, the passive zero-power device does not require components such as an LNA, a PA, a crystal oscillator, and an analog-to-digital converter (ADC), and has many advantages such as small size, light weight, very low cost, and long service life.

### ·Semi-passive zero-power device

The semi-passive zero-power device is not equipped with any conventional battery, and may harvest radio wave energy by an RF energy harvesting module, and store the harvested energy in an energy storage unit. In some embodiments, the energy storage unit is a capacitor. Upon acquiring the energy, the energy storage unit may drive a low-power chip circuit of the zero-power device to implement demodulation of a forward link signal and modulation of a reverse link signal. For a backscatter link, the zero-power device carries out signal transmission via backscattering or ultra-low-power active transmission.

The semi-passive zero-power device does not require any built-in battery for driving either for the forward link or the reverse link, and energy stored in the capacitor used by the semi-passive zero-power device in operation originates from the radio wave energy harvested by the RF energy harvesting module. Therefore, the semi-passive zero-power device is also a true zero-power device. The semi-passive zero-power device inherits many advantages of the passive zero-power device, such as small size, light weight, very low cost, and long service life.

### ·Active zero-power device

The zero-power device used in some scenarios is an active zero-power device. The active zero-power device may be equipped with a built-in battery. The battery is configured to drive a low-power chip circuit of the zero-power device to implement demodulation of a forward link signal and modulation of a reverse link signal. For a backscatter link, the zero-power device carries out signal transmission via backscattering or ultra-low-power active transmission. Therefore, the "zero power" characteristic of the active zero-power device is primarily reflected in that signal transmission in the reverse link does not consume the active zero-power device's own power, but instead relies on backscattering. In the active zero-power device, the built-in battery supplies power to an RFID chip, and thus a read/write range of a tag is increased and reliability of communication is improved. Therefore, the active zero-power device is applicable to some scenarios with relatively high requirements for a communication range, a read latency, or the like.

The classification of zero-power devices based on transmitter types is introduced hereinafter.

### (1) Zero-power device based on backscattering

This type of zero-power device carries out uplink data transmission using a backscattering method as described above. Such a device does not have an active transmitter for active transmission but only has a transmitter for backscattering. Therefore, during uplink data transmission, such a zero-power device requires a network device to provide carriers, and implements uplink data transmission via carrier-based backscattering.

### (2) Zero-power device based on active transmitter

This type of zero-power device has an active transmitter with active transmission capabilities for uplink data transmission. During uplink data transmission, such a device is able to transmit uplink data using its own active transmitter, without relying on a network device to provide carriers. An active transmitter applicable to such a zero-power device may be an ultra-low-power ASK transmitter, an ultra-low-power FSK transmitter, or the like. Based on current implementations, the overall power consumption of such a transmitter may be reduced to a range from 400 microwatts to 600 microwatts during transmission of a 100-microwatt signal by the transmitter.

### (3) Zero-power device with both backscatter and active transmitter capabilities

This type of zero-power device may support both backscatter functionality and active transmitter functionality. The zero-power device determines whether to perform active transmission using an active transmitter or perform backscattering, depending on different situations (such as different battery levels or different available environment energy sources) or based on scheduling of a network device.

Cellular IoT is introduced hereinafter.

The cellular IoT is rapidly developing, such as IoT technologies including narrow band-IoT (NB-IoT), machine-type communications (MTC), reduced capability (RedCap), or the like, which have been standardized in the 3rd Generation Partnership Project (3GPP). However, in many scenarios, IoT communication requirements remain unmet. These scenarios are illustrated as follows.

### ·Strict communication environment

In some IoT scenarios, devices may be exposed to extreme environmental conditions such as high temperatures, extremely low temperatures, high humidity, high voltage, high radiation, or high-speed motion. Such scenarios include extra-high voltage (EHV) substations, monitoring of high-speed train track, environmental monitoring in polar regions, industrial production lines, and the like. In these scenarios, IoT terminal devices cannot operate due to operating environment restrictions of conventional power supplies. In addition, the extreme operating environment is unfavorable for the maintenance of the IoT terminal devices, e.g., battery replacement.

### ·Requirements for ultra-small size of terminals

In some IoT scenarios, such as food traceability, commodity circulation, and smart wearables, a terminal is required to be manufactured with an ultra-small size for convenient use in these scenarios. For example, an IoT terminal device is usually in the form of an electronic tag for commodity management in a circulation process, and the IoT terminal device is embedded in commodity packaging in a very compact form. For another example, a lightweight wearable IoT terminal device improves user experience while meeting user demands.

### ·Requirements for ultra-low-cost IoT communication

In numerous IoT communication scenarios, an IoT terminal device is required to be produced at sufficiently low cost to enhance competitiveness relative to other alternative techniques. For example, in logistics or warehousing scenarios, an IoT terminal device may be attached to each item to facilitate the management of a large volume of items in circulation, thereby achieving precise management of the entire logistics process and lifecycle by means of the communication between the IoT terminal device and a logistics network. These scenarios require the price of the IoT terminal device to be sufficiently competitive.

Therefore, an IoT that has ultra-low cost and an ultra-small size and is battery-free/maintenance-free requires to be developed in the cellular IoT to meet these IoT communication requirements. The zero-power IoT may perfectly meet these requirements.

A zero-power IoT is also known as an ambient IoT or a passive IoT. An ambient IoT device refers to an IoT device that uses various environmental energies, such as RF energy, light energy, solar energy, thermal energy, mechanical energy, and other environmental energies, to power itself. This device may have no energy storage capability or very limited energy storage capability (such as using capacitors with a capacity of tens of microfarads). Compared to existing IoT devices, ambient IoT devices offer numerous advantages, including freedom from conventional batteries, maintenance-free operation, compact size, low complexity and cost, long lifespan, and more.

The zero-power IoT is at least applicable to the following four types of scenarios:
(1) object identification, such as logistics management, management of production line products, and supply chain management;
(2) environmental monitoring, such as monitoring of temperature, humidity, and harmful gases in an operating environment and a natural environment;
(3) positioning, such as indoor positioning, intelligent object tracking, and positioning of production line items;
(4) intelligent control, such as intelligent control of various appliances in smart homes (e.g., turning on/off air conditioners and adjusting temperature) and intelligent control of various facilities in agricultural greenhouses (e.g., automatic irrigation and fertilization).

### Ambient energy-based IoT device (ambient IoT device)

In new radio (NR) systems and Wi-Fi systems, battery-free and low-cost characteristics of devices may support low-cost large-scale deployment and maintenance-free operation of IoT devices. Currently, standards are studying how to support ambient energy-based IoT devices (known as ambient IoT devices or AMP IoT devices) in the NR systems and the Wi-Fi systems. The energy required for their operation is acquired by ambient energy harvesting from such as wireless signals, solar energy, and thermal energy. These devices are analogous to the passive or semi-passive devices used in the zero-power communication.

In 3GPP RAN, a study item on ambient IoT devices has been conducted, and the ambient IoT devices are categorized into roughly three types: Device A, Device B, and Device C, each with corresponding complexity and communication capabilities.
·Device A, which does not have energy storage capabilities and cannot perform independent signal transmission. That is, the device of this type employs a backscatter transmission mode.
·Device B, which has energy storage capabilities but cannot perform independent signal transmission. That is, the device of this type employs a backscatter transmission mode and has capability to amplify backscattered signals using stored energy.
·Device C, which has energy storage capabilities and has capabilities to perform independent signal transmission. That is, the device of this type has active transmission capability.

Device A has the lowest complexity and power consumption, with power consumption as low as 1 µW. However, the communication range of this device is limited, typically only a few meters. Device A requires a network device to provide a carrier signal for backscatter transmission. Device C typically has a capacitor with a large capacity to store energy from the environment, and the power consumption of this device may support levels of several hundred µW, enabling active signal transmission and a relatively large communication range. Since Device C has active transmission capability, it does not require a network device to provide a carrier signal. The complexity and power consumption of Device B fall between those of Device A and Device C.

In addition, the ambient energy harvesting supported by zero-power terminals may also include various types of energy, such as RF, solar energy, thermal energy, mechanical energy, and other energies. The zero-power terminals based on wireless RF energy harvesting may require the network to provide RF power supply signals.

FIG. 6 is a structural schematic diagram of a communication system according to an exemplary embodiment of the present disclosure. The communication system includes a network device 120 and a terminal device 140.

The network device 120 may be an access network device in the communication system, such as a base station. The terminal device 140 may be the ambient IoT device introduced above. The network device 120 performs data transmission with the terminal device 140 via signals. The signal transmitted from the terminal device 140 to the network device 120 is referred to as an uplink signal; the signal transmitted from the network device 120 to the terminal device 140 is referred to as a downlink signal. In the present disclosure, the uplink signal and/or downlink signal includes a frequency offset calibration signal; or, the uplink signal and/or downlink signal may include at least two sub-signals for frequency offset calibration.

It should be noted that FIG. 6 exemplarily illustrates one network device and one terminal device. Optionally, the communication system may include a plurality of network devices, and the coverage area of each network device may include a different number of terminal devices. This is not limited in the embodiments of the present disclosure. The terminal device 140 may be an ambient IoT device.

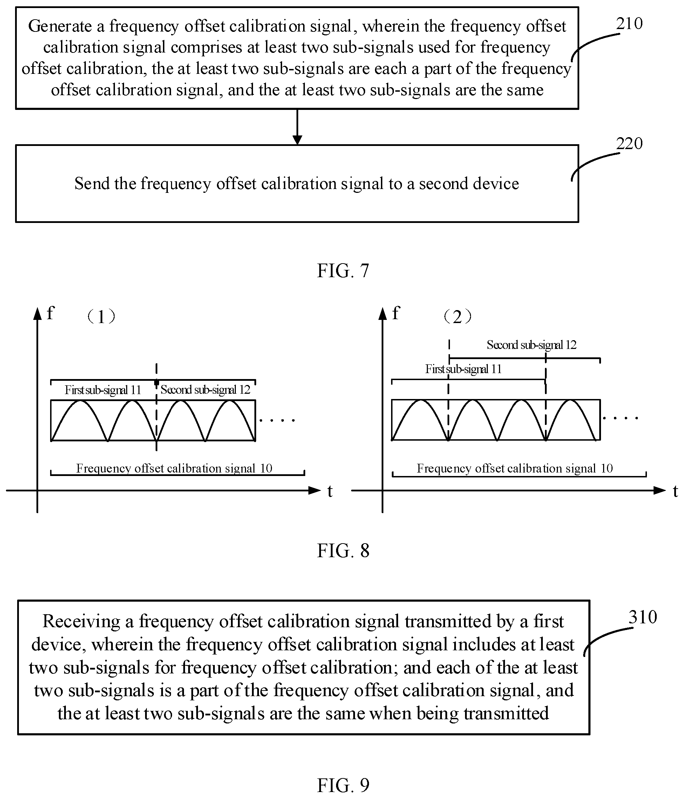

FIG. 7 is a flowchart of a method for calibrating frequency offset according to an exemplary embodiment of the present disclosure, which is performed by a first device. The first device may be a network device or a terminal device as shown in FIG. 6. The method includes the following steps.

**Step 210,** generating a frequency offset calibration signal, wherein the frequency offset calibration signal includes at least two sub-signals for frequency offset calibration; and each of the at least two sub-signals is a part of the frequency offset calibration signal, and the at least two sub-signals are the same.

In some embodiments, the at least two sub-signals being the same includes being the same in at least one of the following aspects: a waveform, data, a length, a phase, a sequence used to generate the at least two sub-signals, or a formula used to generate the at least two sub-signals.

In some embodiments, the at least two sub-signals being the same in the waveform means, in other words, that the at least two sub-signals have the same data; it may also be said that the sequence used to generate the at least two sub-signals is the same, or the formula used to generate the at least two sub-signals is the same.

In some embodiments, since the at least two sub-signals are the same, the at least two sub-signals have the same length, which also means that the at least two sub-signals have the same phase.

In some embodiments, the at least two sub-signals include a first sub-signal and a second sub-signal. The first sub-signal and the second sub-signal are two consecutive parts of a frequency offset calibration signal; or, the first sub-signal and the second sub-signal are two partially overlapping parts of a frequency offset calibration signal. As shown in FIG. 8, a frequency offset calibration signal 10 includes at least two sub-signals, which include a first sub-signal 11 and a second sub-signal 12. The schematic diagram (1) of FIG. 8 illustrates the case where the first sub-signal 11 and the second sub-signal 12 are two consecutive parts of the frequency offset calibration signal 10. The schematic diagram (2) of FIG. 8 illustrates the case where the first sub-signal 11 and the second sub-signal 12 are two partially overlapping parts of the frequency offset calibration signal 10.

In some embodiments, the at least two sub-signals use at least one of: an orthogonal frequency-division multiplexing (OFDM) waveform, a mixed waveform of an OFMD waveform and an on-off keying (OOK) waveform, a triangle waveform, a square waveform, or a pulse waveform.

In some embodiments, the subcarrier spacing takes at least one of the following values: 15 kHz, 30 kHz, 60 kHz, 120 kHz, 240 kHz, 480 kHz, 312.5 kHz, or 31.25 kHz. It should be noted that the subcarrier spacing may also take any value other than the aforementioned values for the subcarrier spacing, and the embodiments of the present disclosure do not list all possible values herein. Optionally, the subcarrier spacing of 15 kHz, 30 kHz, 60 kHz, 120 kHz, 240 kHz, or 480 kHz is compatible with the NR system; the subcarrier spacing of 312.5 kHz or 31.25 kHz is compatible with the Wi-Fi system.

In some embodiments, the frequency offset calibration signal is a periodic signal. One cycle of the frequency offset calibration signal is a cycle of a smallest sub-signal that repeatedly appears in the frequency offset calibration signal; or, one cycle of the frequency offset calibration signal is a time-domain length occupied by the smallest sub-signal that repeatedly appears in the frequency offset calibration signal. Each of at least two sub-signals includes at least one smallest sub-signal.

In some embodiments, each of the at least two sub-signals occupies a duration in the time domain that is not less than one time-domain unit, or occupies a duration in the time domain that is less than one time-domain unit. Optionally, in a case where each sub-signal occupies a duration in the time domain that is not less than to one time-domain unit, the duration each sub-signal occupies in the time domain is an integer multiple of one time-domain unit, or the duration each sub-signal occupies in the time domain is not an integer multiple of one time-domain unit.

The time-domain unit is at least one of: a frame, a subframe, a slot, or a symbol. Optionally, the time length of a frame is defined as 10 ms; a frame includes 10 subframes, and the time length of a subframe is 1 ms; a subframe includes i slots, where i is a positive integer, and the value of i is related to the subcarrier spacing (the larger the subcarrier spacing, the shorter the actual time length of a slot); a slot includes 14 symbols, which may be OFDM symbols. It should be noted that the time length of a frame may also be defined as other durations, such as 15 ms, 20 ms, etc., and this is not limited in the embodiments of the present disclosure.

Since the frequency offset calibration signal is a periodic signal, one time-domain unit includes a plurality of cycles of the frequency offset calibration signal; or, one time-domain unit includes one cycle of the frequency offset calibration signal.

In some embodiments, each of the at least two sub-signals occupies a plurality of time-domain units in the time domain; or, occupies one time-domain unit in the time domain; or, the duration occupied in the time domain is not a positive integer multiple of one time-domain unit; or, the duration occupied in the time domain is less than one time-domain unit.

Illustratively, one time-domain unit is one symbol. Each of at least two sub-signals occupies 2 symbols in the time domain; or, occupies 1 symbol in the time domain; or, occupies 2.5 symbols in the time domain; or, occupies 0.5 symbols in the time domain.

In some embodiments, since one time-domain unit includes one or a plurality of cycles of a frequency offset calibration signal, each of at least two sub-signals includes, in the time domain: one or a plurality of cycles, a portion of one cycle, or a non-integer multiple of one cycle of the frequency offset calibration signal. For example, each sub-signal includes 1 cycle, 2 cycles, 0.5 cycles, or 2.5 cycles of the frequency offset calibration signal in the time domain.

In some embodiments, an interval of a time-domain start position of each sub-signal in the at least two sub-signals is a positive integer multiple of a cycle. This cycle is the cycle of the frequency offset calibration signal.

In some embodiments, an interval of a time-domain start position of each sub-signal in at least two sub-signals is less than one time-domain unit. For example, in a case where the time-domain unit is one symbol, as shown in schematic diagram (1) of FIG. 8, the first sub-signal 11 and the second sub-signal 12 occupy one symbol, and the interval between the time-domain start positions of the first sub-signal 11 and the second sub-signal 12 is half a symbol, that is, half a time-domain unit.

**Step 220,** transmitting the frequency offset calibration signal to a second device.

Frequency offset may also be referred to as carrier frequency offset (CFO). The causes of frequency offset include at least one of: first, a clock difference between the transmitting end and the receiving end of the signal, which is caused by the mismatch between the oscillators at the transmitting end and the receiving end; second, Doppler shift occurring during the spatial transmission of the signal.

In some embodiments, in order to acquire the frequency offset between the first device and the second device for frequency offset calibration, the first device transmits a frequency offset calibration signal to the second device. The frequency offset calibration signal includes at least two sub-signals for frequency offset calibration, and each of the at least two sub-signals is a part of the frequency offset calibration signal and the at least two sub-signals are the same.

In summary, in the method according to the embodiments of the present disclosure, frequency offset calibration is performed by transmitting a frequency offset calibration signal, which includes at least two sub-signals for frequency offset calibration. These at least two sub-signals are the same. This method does not require a large amount of storage or computing resources, nor does it require complex calculations to achieve frequency offset calibration, making it suitable for devices with simple structures such as ambient IoT devices.

FIG. 9 is a flowchart of a method for calibrating frequency offset according to an exemplary embodiment of the present disclosure, which is performed by a second device. The second device may be the network device or terminal device shown in FIG. 6. The method includes the following steps.

**Step 310,** receiving a frequency offset calibration signal transmitted by a first device, wherein the frequency offset calibration signal includes at least two sub-signals for frequency offset calibration; and each of the at least two sub-signals is a part of the frequency offset calibration signal, and the at least two sub-signals are the same when being transmitted.

Frequency offset may also be referred to as CFO. The causes of frequency offset include at least one of: first, a clock difference between the transmitting end and the receiving end of the signal, which is caused by the mismatch between the oscillators at the transmitting end and the receiving end; second, Doppler shift occurring during the spatial transmission of the signal.

In some embodiments, in order to acquire the frequency offset between the first device and the second device for frequency offset calibration, the second device receives a frequency offset calibration signal transmitted from the first device. The frequency offset calibration signal includes at least two sub-signals for frequency offset calibration; and each of the at least two sub-signals is a part of the frequency offset calibration signal, and the at least two sub-signals are the same when being transmitted.

In some embodiments, the at least two sub-signals being the same includes being the same in at least one of the following aspects: a waveform, data, a length, a phase, a sequence used to generate the at least two sub-signals, or a formula used to generate the at least two sub-signals.

In some embodiments, the at least two sub-signals being the same in the waveform means, in other words, that the at least two sub-signals have the same data; it may also be said that the sequence used to generate the at least two sub-signals is the same, or the formula used to generate the at least two sub-signals is the same.

In some embodiments, since the at least two sub-signals are the same, the at least two sub-signals have the same length, which also means that the at least two sub-signals have the same phase.

In some embodiments, the at least two sub-signals include a first sub-signal and a second sub-signal. The first sub-signal and the second sub-signal are two consecutive parts of a frequency offset calibration signal; or, the first sub-signal and the second sub-signal are two partially overlapping parts of a frequency offset calibration signal. As shown in FIG. 8, a frequency offset calibration signal 10 includes at least two sub-signals, which include a first sub-signal 11 and a second sub-signal 12. The schematic diagram (1) of FIG. 8 illustrates the case where the first sub-signal 11 and the second sub-signal 12 are two consecutive parts of the frequency offset calibration signal 10. The schematic diagram (2) of FIG. 8 illustrates the case where the first sub-signal 11 and the second sub-signal 12 are two partially overlapping parts of the frequency offset calibration signal 10.

In some embodiments, the at least two sub-signals use at least one of: an OFDM waveform, a mixed waveform of an OFMD waveform and an OOK waveform, a triangle waveform, a square waveform, or a pulse waveform.

In some embodiments, the subcarrier spacing takes at least one of the following values: 15 kHz, 30 kHz, 60 kHz, 120 kHz, 240 kHz, 480 kHz, 312.5 kHz, or 31.25 kHz. It should be noted that the subcarrier spacing may also take any value other than the aforementioned values for the subcarrier spacing, and the embodiments of the present disclosure do not list all possible values herein. Optionally, the subcarrier spacing of 15 kHz, 30 kHz, 60 kHz, 120 kHz, 240 kHz, or 480 kHz is compatible with the NR system; the subcarrier spacing of 312.5 kHz or 31.25 kHz is compatible with the Wi-Fi system.

In some embodiments, the frequency offset calibration signal is a periodic signal. One cycle of the frequency offset calibration signal is a cycle of a smallest sub-signal that repeatedly appears in the frequency offset calibration signal; or, one cycle of the frequency offset calibration signal is a time-domain length occupied by the smallest sub-signal that repeatedly appears in the frequency offset calibration signal. Each of at least two sub-signals includes at least one smallest sub-signal.

In some embodiments, each of at least two sub-signals occupies a duration in the time domain that is not less than one time-domain unit, or occupies a duration in the time domain that is less than one time-domain unit. Optionally, in a case where each sub-signal occupies a duration in the time domain that is not less than one time-domain unit, the duration each sub-signal occupies in the time domain is an integer multiple of one time-domain unit, or the duration each sub-signal occupies in the time domain is not an integer multiple of one time-domain unit.

The time-domain unit is at least one of: a frame, a subframe, a slot, or a symbol. Optionally, the time length of a frame is defined as 10 ms; a frame includes 10 subframes, and the time length of a subframe is 1 ms; a subframe includes i slots, where i is a positive integer, and the value of i is related to the subcarrier spacing (the larger the subcarrier spacing, the shorter the actual time length of a slot); a slot includes 14 symbols, which may be OFDM symbols. It should be noted that the time length of a frame may also be defined as other durations, such as 15 ms, 20 ms, etc., and this is not limited in the embodiments of the present disclosure.

Since the frequency offset calibration signal is a periodic signal, one time-domain unit includes a plurality of cycles of the frequency offset calibration signal; or, one time-domain unit includes one cycle of the frequency offset calibration signal.

In some embodiments, each of the at least two sub-signals occupies a plurality of time-domain units in the time domain; or, occupies one time-domain unit in the time domain; or, the duration occupied in the time domain is not a positive integer multiple of one time-domain unit, or, the duration occupied in the time domain is less than one time-domain unit.

Illustratively, one time-domain unit is one symbol. Each of at least two sub-signals occupies 2 symbols in the time domain; or, occupies 1 symbol in the time domain; or, occupies 2.5 symbols in the time domain; or, occupies 0.5 symbols in the time domain.

In some embodiments, since one time-domain unit includes one or a plurality of cycles of a frequency offset calibration signal, each of at least two sub-signals includes, in the time domain: one or a plurality of cycles, or a portion of one cycle, or a non-integer multiple of one cycle of the frequency offset calibration signal. For example, each sub-signal includes 1 cycle, 2 cycles, 0.5 cycles, or 2.5 cycles of the frequency offset calibration signal in the time domain.

In some embodiments, an interval of a time-domain start position of each sub-signal in at least two sub-signals is a positive integer multiple of a cycle. This cycle is the cycle of the frequency offset calibration signal.

In some embodiments, an interval of a time-domain start position of each sub-signal in at least two sub-signals is less than one time-domain unit. For example, in a case where the time-domain unit is one symbol, as shown in schematic diagram (1) of FIG. 8, the first sub-signal 11 and the second sub-signal 12 occupy one symbol, and the interval between the time-domain start positions of the first sub-signal 11 and the second sub-signal 12 is half a symbol, that is, half a time-domain unit.

In some embodiments, the second device receives signals transmitted by the first device. In a case where the first device is a terminal device and the second device is an access network device, the second device receives uplink signals transmitted by the first device. In a case where the first device is an access network device and the second device is a terminal device, the second device receives downlink signals transmitted by the first device.

In some embodiments, the second device performs frequency offset calibration based on at least two sub-signals used for frequency offset calibration. For example, the second device performs frequency offset calibration on an uplink signal based on at least two sub-signals used for frequency offset calibration, wherein the uplink signal includes the at least two sub-signals; or, the second device performs frequency offset calibration on a downlink signal based on at least two sub-signals used for frequency offset calibration, wherein the downlink signal includes the at least two sub-signals.

In some embodiments, the access network device calibrates a first frequency error using at least two sub-signals. The first frequency error is an error generated when the terminal device transmits an uplink signal, and the error includes at least one of: an error caused by an error in the oscillator used by the terminal device, or an error generated during the transmission of the uplink signal, which includes the at least two sub-signals. Alternatively, the terminal device calibrates a second frequency error using at least two sub-signals. The second frequency error is an error generated when the terminal device receives a downlink signal, and the error includes at least one of: an error caused by an error in the oscillator used by the terminal device, or an error generated during the transmission of the downlink signal, which includes the at least two sub-signals.

Illustratively, the terminal device uses a resistor-capacitor (RC) oscillator or an inductor-capacitor (LC) oscillator, both of which may cause errors when the terminal device transmits an uplink signal and receives a downlink signal. When the terminal device transmits an uplink signal, due to an error in the frequency accuracy of the oscillator, there is an error between the actual frequency and the theoretical frequency of the uplink signal transmitted by the terminal device; and in addition, during the transmission of the uplink signal, Doppler shift may occur, resulting in a first frequency error in the uplink signal received by the access network device. This first frequency error includes at least one of: an error caused by an error in the oscillator used by the terminal device, or an error generated during the transmission of the uplink signal. When the access network device transmits a downlink signal, due to the high frequency accuracy of the oscillator used by the access network device, errors generally do not occur. However, Doppler shift may occur during the transmission of the downlink signal; and due to the mismatch between the oscillator of the terminal device and the oscillator of the access network device, errors may occur when the terminal device receives the downlink signal. Therefore, the downlink signal received by the terminal device have a second frequency error, which includes at least one of: an error caused by an error in the oscillator used by the terminal device, or an error generated during the transmission of the downlink signal. After receiving the uplink signal or the downlink signal, the second device performs frequency offset calibration on the uplink signal or the downlink signal based on at least two sub-signals in the uplink signal or the downlink signal.

In some embodiments, the terminal device does not perform frequency offset calibration when transmitting the uplink signal, but still transmits the uplink signal according to the theoretical frequency. Upon receiving the uplink signal, the access network device calculates the frequency offset based on at least two sub-signals used for frequency offset calibration to perform calibration.

In summary, in the method according to the embodiments of the present disclosure, frequency offset calibration is performed using at least two sub-signals in the received signal. This method does not require a large amount of storage or computing resources, nor does it require complex calculations to achieve frequency offset calibration, making it suitable for devices with simple structures such as ambient IoT devices.

In the optional embodiments based on FIG. 7 or FIG. 9, the signal may be represented in complex form, and thus two consecutive sub-signals received by the second device may be expressed as: ${r}_{1} \left(n\right) = r \left(n\right) = {x}_{1} \left(n\right) ∗ {exp}^{\left(-j∗\left(2∗pi∗f∗n∗{T}_{s}+φ\right)\right)} + η \left({nT}_{s}\right)$ ${r}_{2} \left(n\right) = r \left(n+{N}_{d}\right) = {x}_{2} \left(n\right) ∗ {exp}^{\left(-j∗\left(2∗pi∗f∗\left(n+{N}_{d}\right)∗{T}_{s}\right)+φ\right)} + η \left({nT}_{s}\right)$

In the formula, *r*₁(*n*) represents the first sub-signal received by the second device; *r*₂(*n*) represents the second sub-signal received by the second device; *x*₁(*n*) represents the first sub-signal transmitted by the first device; *x*₂(*n*) represents the second sub-signal transmitted by the first device; *η*(*nTₛ*) represents noise; n represents the sampling point ordering (for example, *r*₁(1) may represent the 1^{st} sampling point in at least two sub-signals); *Tₛ* represents the time interval between sampling points;*exp*^{(*-j**(2**pi***f***n***T*ₛ+*φ*))} represents the frequency error corresponding to the first sub-signal; *exp*^{(*-j**(2**pi*f**(*n+N*_{d}*)***T*ₛ*)+φ*)} represents the frequency error corresponding to the second sub-signal; *exp^{j}* represents the exponential form of a complex number, where j is the imaginary unit; *pi* is π; *f* represents the frequency offset; *N_{d}* represents the transmission time interval between two consecutive sub-signals, and *N_{d}* may also be referred to as the interval of the time-domain start position of each sub-signal in at least two sub-signals; *φ* represents the initial phase.

By multiplying the first sub-signal by the conjugate complex number of the second sub-signal, the following is obtained: $R = {\sum }_{n = 0}^{L - 1} {r}_{1} \left(n\right) {r}_{2}^{∗} \left(n\right)$

In the formula, R represents the result of the conjugate multiplication; L represents the data length of the first sub-signal and the second sub-signal, i.e., the number of sampling points; ${r}_{2}^{∗} \left(n\right)$ represents the conjugate complex number of *r*₂(*n*).

After expanding this formula, the following can be obtained: $R = {exp}^{j ∗ 2 ∗ pi ∗ f ∗ {N}_{d} ∗ {T}_{s}} {\sum }_{n = 0}^{L - 1} {x}_{1} \left(n\right) {x}_{2}^{*} \left(n\right) + η$

In the formula, *η* represents noise; ${x}_{2}^{∗} \left(n\right)$ represents the conjugate complex number of *x*₂(*n*).

Among them, since at least two sub-signals are the same, *x*₁(*n*) *= x*₂(*n*). If the impact of noise on the signal is ignored, the above formula can be expressed as: $R = {exp}^{j ∗ 2 ∗ pi ∗ f ∗ {N}_{d} ∗ {T}_{s}} {\sum }_{n = 0}^{L - 1} {x}_{1} {\left(n\right)}^{2}$

It can be derived that: $arg \left(R\right) = 2 ∗ pi ∗ f ∗ {N}_{d} ∗ {T}_{s}$

In the formula, arg(R) represents the principal argument angle of the complex number R.

Therefore, the frequency offset f can be expressed as: $f = \frac{arg \left(R\right) ∗ {f}_{s}}{2 ∗ pi ∗ {N}_{d}}$

In the formula, *fₛ* represents the sampling rate, and *fₛ* represents the reciprocal of *T_{S}.*

In some embodiments, the frequency offset f includes at least one of: an error caused by an error in the oscillator used by the terminal, or an error generated during signal transmission.

It can also be derived that the frequency offset range is: $\left|f\right| \leq \frac{{f}_{s}}{2 ∗ {N}_{d}}$

In some embodiments, the frequency offset range may also be referred to as the frequency sweep range. As can be seen from the above formula, the frequency sweep range is related to the sampling rate *fₛ* and the transmission time interval *N_{d}* between two consecutive sub-signals. The smaller the transmission time interval *N_{d}* between two consecutive sub-signals (i.e., the interval of the time-domain start position of each sub-signal in at least two sub-signals), the larger the frequency sweep range.

The larger the frequency sweep range, the greater the frequency offset range that can be calibrated, which means the larger the error range allowed when the first device transmits signals, or the larger the error range allowed when the second device receives signals. When the second device receives signals, if the actual frequency error of the signal transmitted exceeds the frequency sweep range, it may prevent the second device from performing frequency offset calibration on the received signal. To expand the frequency sweep range, the following methods are adopted.

Description is provided hereinafter by taking at least two sub-signals as two sub-signals and the time-domain unit as a symbol for example; however, the present disclosure is not limited thereto.

**Step 410,** performing an inverse fast Fourier transform (IFFT) on n frequency-domain sampling points to obtain corresponding n time-domain sampling points, wherein the n time-domain sampling points are time-domain sampling points of one time-domain unit in the frequency offset calibration signal.

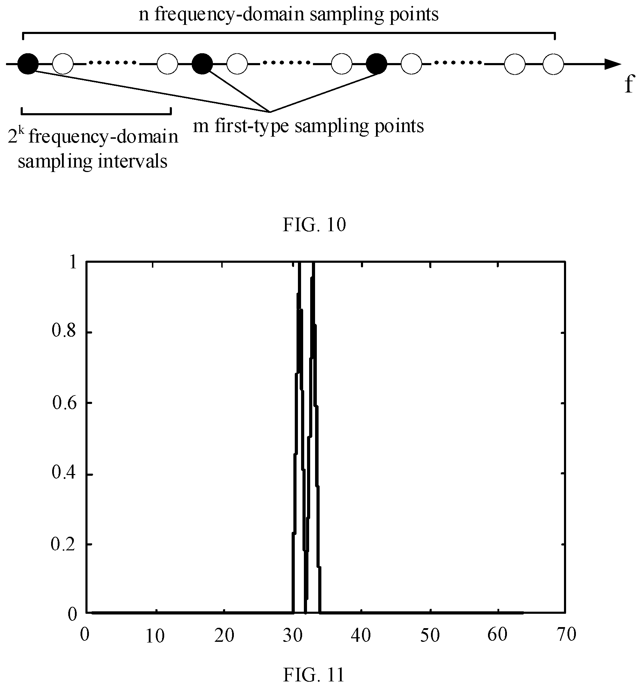

In some embodiments, the frequency offset calibration signal includes n time-domain sampling points within a time-domain unit, and the data corresponding to the n time-domain sampling points is obtained by performing an IFFT on the data corresponding to n frequency-domain sampling points. Optionally, the n frequency-domain sampling points include m first-type sampling points with corresponding non-zero data. Here, the interval between any two adjacent first-type sampling points is the same and is equal to 2^{k} frequency-domain sampling intervals, where m is a positive integer greater than or equal to 2, n is a positive integer greater than or equal to m, and k is a non-negative integer. Specifically, 2^{k} refers to 2 raised to the power of k. As shown in FIG. 10, there are a total of n frequency-domain sampling points, which include m first-type sampling points. The data corresponding to the first-type sampling points is not zero, and the interval between two adjacent first-type sampling points is equal to 2^{k} frequency-domain sampling intervals.

In some embodiments, the data corresponding to the frequency-domain sampling points other than the m first-type sampling points among the n frequency-domain sampling points is zero.

In some embodiments, the frequency-domain sampling interval 2^{k} is the absolute value of the difference between two adjacent first-type sampling points. In a case where k is 0, n is 64, and m is 64, it means all 64 frequency-domain sampling points are the first-type sampling points. In a case where k is 1 and n is 64, it means m is a positive integer not greater than 32; for example, the 1^{st} first-type sampling point corresponds to the 1^{st} frequency-domain sampling point, and the 2^{nd} first-type sampling point corresponds to the 3^{rd} frequency-domain sampling point.

Each symbol obtained in this way is composed of 2^{k} segments of repeated data, and the signal waveform formed by symbols appears as a repetitive waveform. In a case where the frequency-domain sampling interval is 2^{k}, the number of the repeated data segments corresponding to one symbol after an IFFT is also 2^{k}, that is, 2^{k} repetitive waveforms. Therefore, two sub-signals only need to be separated by one repetitive waveform for transmission, such that they do not interfere with each other, which means that the transmission time interval *N_{d}* between the two signals is reduced to the length of $\frac{1}{{2}^{k}}$ symbols. According to the formula for frequency offset *f* described above, when the transmission time interval *N^{d}* between two sub-signals is reduced to the length of $\frac{1}{{2}^{k}}$ symbols, the frequency sweep range is expanded to ±2^{*k*-1} × *g kHz,* where g is the subcarrier spacing selected during transmission.

Regarding the positional distribution of m first-type sampling points among n frequency-domain sampling points, at least one of the following three distribution modes is included.

**Distribution mode 1:** The sampling point positions of the m first-type sampling points include the first and/or the last frequency-domain sampling point among the n frequency-domain sampling points; or, the sampling point positions of the m first-type sampling points do not include the first and/or the last frequency-domain sampling point among the n frequency-domain sampling points.

**Distribution mode 2:** The sampling point positions of m first-type sampling points are centralized positions of n frequency-domain sampling points; or, the sampling point positions of m first-type sampling points are not centralized positions of n frequency-domain sampling points.

**Distribution mode 3:** The sampling point positions of m first-type sampling points are symmetrical positions of n frequency-domain sampling points; or, the sampling point positions of m first-type sampling points are asymmetrical positions of n frequency-domain sampling points.

In some embodiments, centralized positions may be understood as not including the first and/or the last frequency-domain sampling point; non-centralized positions may be understood as including the first and/or the last frequency-domain sampling point among the n frequency-domain sampling points.

Among them, distribution mode 2 and distribution mode 3 can be combined. For example, the sampling point positions of m first-type sampling points are centralized symmetrical positions of n frequency-domain sampling points; or, the sampling point positions of m first-type sampling points are centralized asymmetrical positions of n frequency-domain sampling points; or, the sampling point positions of m first-type sampling points are non-centralized symmetrical positions of n frequency-domain sampling points; or, the sampling point positions of m first-type sampling points are non-centralized asymmetrical positions of n frequency-domain sampling points.

The sampling point positions of m first-type sampling points are symmetrical positions of n frequency-domain sampling points, representing centrosymmetric. For example, in a case where n is 8 and k is 0 (i.e., the interval between two adjacent first-type sampling points is 1) and m is 2, and the sampling point positions of the first-type sampling points are symmetrical positions of the frequency-domain sampling points, the first-type sampling points are respectively the 4^{th} and 5^{th} frequency-domain sampling points. This case may also be referred to as the sampling point positions of the first-type sampling points being centralized positions of the frequency-domain sampling points, or the sampling point positions of the first-type sampling points not including the first and/or last frequency-domain sampling points among the frequency-domain sampling points. In a case where n is 8 and k is 3 (i.e., the interval between two adjacent first-type sampling points is 8), and m is 2, and the sampling point positions of the first-type sampling points are symmetrical positions of the frequency-domain sampling points, the first-type sampling points are respectively the 1^{st} and 8^{th} frequency-domain sampling points. This case may also be referred to as the sampling point positions of the first-type sampling points being non-centralized positions of the frequency-domain sampling points, or the sampling point positions of the first-type sampling points including the first and/or last frequency-domain sampling points among the frequency-domain sampling points.

Illustratively, in a case where n is 64 (i.e., there are 64 sampling points), and m is 4 and k is 2, if the sampling point positions of the 4 first-type sampling points are centralized asymmetrical positions of the 64 frequency-domain sampling points, the sampling point positions of the 4 first-type sampling points may be, for example, 27, 31, 35, and 39. Alternatively, in a case where m is 4 and the sampling point positions of the 4 first-type sampling points are non-centralized asymmetrical positions of the 64 frequency-domain sampling points, the sampling point positions of the 4 first-type sampling points may be, for example, 1, 5, 9, and 13; or 7, 11, 15, and 19; or 45, 49, 53, and 57. Alternatively, in a case where m is 4 and k is 2, and the sampling point positions of the 4 first-type sampling points are centralized symmetrical positions of the 64 frequency-domain sampling points, the sampling positions of the 4 first-type sampling points may be, for example, 26, 30, 34, and 38.

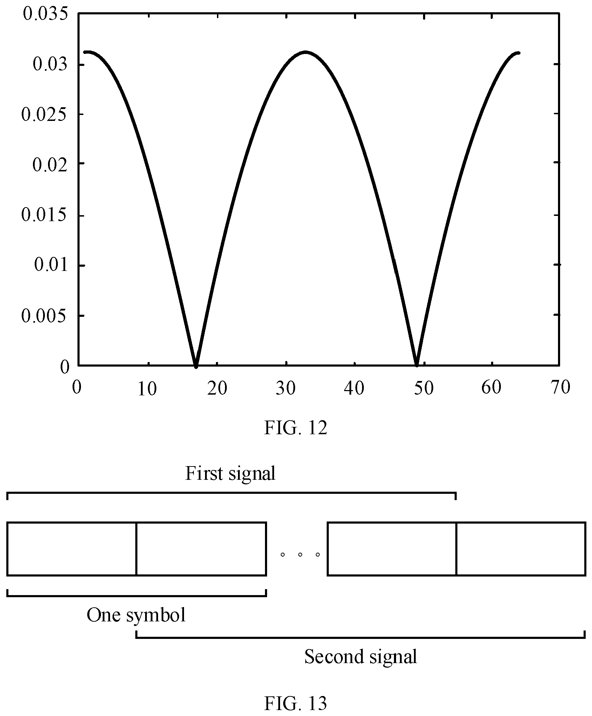

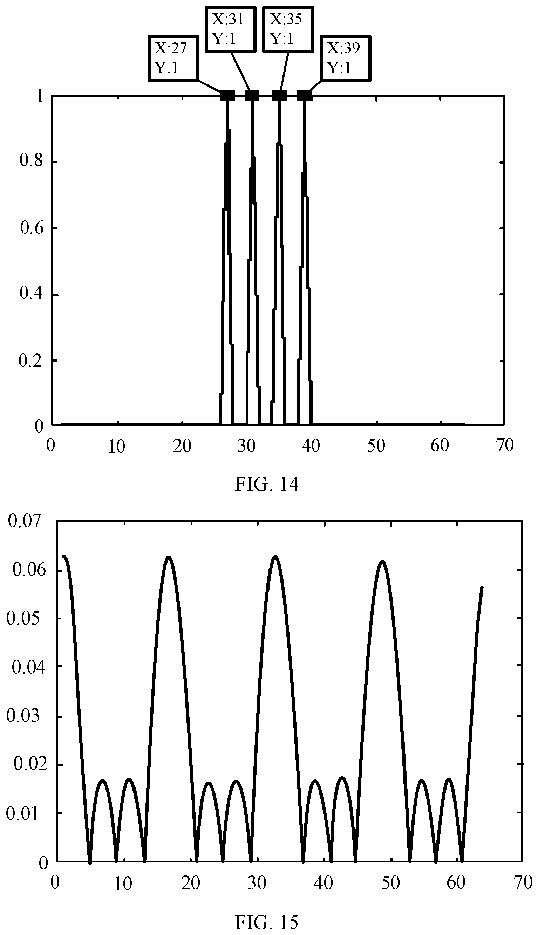

Illustratively, for one symbol, n is 64, i.e., there are 64 sampling points in one symbol. In a case where m is 2 and k is 1, the spectrum diagram corresponding to the symbol is as shown in FIG. 11, where the 31^{st} and 33^{rd} sampling points are set as the first-type sampling points, and the data corresponding to the first-type sampling points is 1; the data corresponding to the frequency-domain sampling points other than the m first-type sampling points is 0. A time-domain waveform corresponding to one symbol, as shown in FIG. 12, is obtained by performing an IFFT on the 64 frequency-domain sampling points in the spectrum as shown in FIG. 11. When the waveform of a symbol is the waveform shown in FIG. 12, each symbol is composed of two completely repeated data segments, and the transmission time interval *N_{d}* between two consecutive signals is reduced to half a symbol length, as shown in FIG. 13. In this case, the frequency sweep range is expanded to one subcarrier spacing. In a case where m is 4 and k is 2, the spectrum diagram corresponding to the symbol is as shown in FIG. 14, where the sampling point positions of the first-type sampling points are centralized asymmetric positions of the 64 frequency-domain sampling points. A time-domain waveform corresponding to one symbol, as shown in FIG. 15, is obtained by performing an IFFT on the 64 frequency-domain sampling points in the spectrum as shown in FIG. 14. When the waveform of a symbol is the waveform shown in FIG. 15, each symbol is composed of four completely repeated data segments, and the transmission time interval *N_{d}* between two consecutive signals is reduced to 1/4 of a symbol length. In this case, the frequency sweep range is expanded to two subcarrier spacings.

It should be noted that the value of k may be 0. In a case where the value of k is set to 0, for a time-domain waveform corresponding to one symbol that is obtained by performing an IFFT on 64 frequency-domain sampling points in the spectrum, there is no repeated data within the time-domain waveform. In this case, the transmission time interval *N_{d}* between two consecutive signals is one symbol length, and the frequency sweep range is half a subcarrier spacing.

In summary, the method according to the embodiments of the present disclosure enables the interval of the time-domain start position of each sub-signal in at least two sub-signals to be less than one time-domain unit, thereby expanding the frequency sweep range. The second device using this method does not need to perform special processing when receiving signals, such that no additional resource consumption is imposed on the second device.

In the optional embodiments based on FIG. 7 or FIG. 9, the frequency sweep range is expanded, but the resulting waveform is not flat in both the time and frequency domains. The non-flat waveform implies that the energy is relatively concentrated when the signal is transmitted, which is not conducive to signal transmission. Therefore, the following two schemes are proposed. It should be noted that the following two schemes can be implemented simultaneously or alternatively.
Scheme 1: time-domain flattening.
Scheme 2: frequency-domain flattening.

The two aforementioned implementation methods are introduced in sequence hereinafter, but the order of introduction does not necessarily reflect the relative merits of the two methods.

### Scheme 1: time-domain flattening.

Time-domain flattening involves processing the first-type sampling points in the spectrogram. The data corresponding to m first-type sampling points is determined based on at least one of the following pieces of information:
·A sequence consisting entirely of 1s;
·A first sequence;
·A partial sequence of the first sequence;
·First modulation information;
·A pseudo-random sequence of ±1.

The first sequence includes at least one of: a Zadoff-Chu (ZC) sequence, a pseudo-random noise (PN) sequence, an m-sequence, or a Gold sequence. The first modulation information includes at least one of: quadrature phase shift keying (QPSK) modulation information, or quadrature amplitude modulation (QAM) modulation information.

Illustratively, in a case where the data corresponding to m first-type sampling points is 1, the corresponding spectrogram and time-domain waveform diagram are shown in FIG. 11 and FIG. 12, or FIG. 14 and FIG. 15, which is not be elaborated further here.

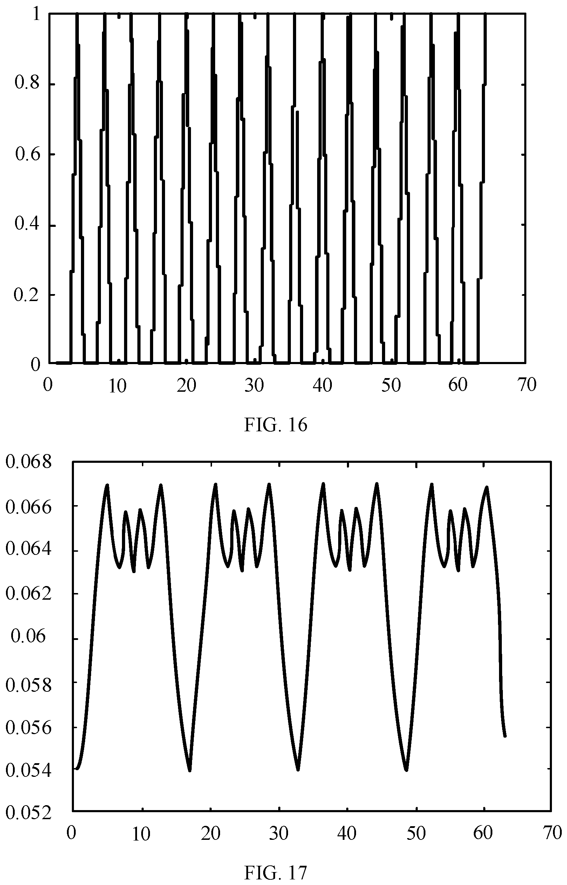

Illustratively, the data corresponding to m first-type sampling points is determined based on a first sequence, where the first sequence is a randomized sequence, or alternatively, the first sequence is a pseudo-random sequence, and the first sequence includes at least one of: a ZC sequence, a PN sequence, an m-sequence, or a Gold sequence. FIG. 16 is a spectrum diagram where n is 64, m is 16, k is 2, and the data corresponding to the first-type sampling points is determined based on a ZC sequence. FIG. 17 is a time-domain waveform diagram obtained after performing an IFFT on the sampling points in the spectrum diagram corresponding to FIG. 16. In the case where the data corresponding to m first-type sampling points is determined based on a partial sequence of the first sequence, the obtained spectrum diagram and time-domain waveform diagram are similar to those of the first-type sampling points determined based on the first sequence, and is not further described here. The data values corresponding to the first-type sampling points are in one-to-one correspondence with the sequence elements in the first sequence.

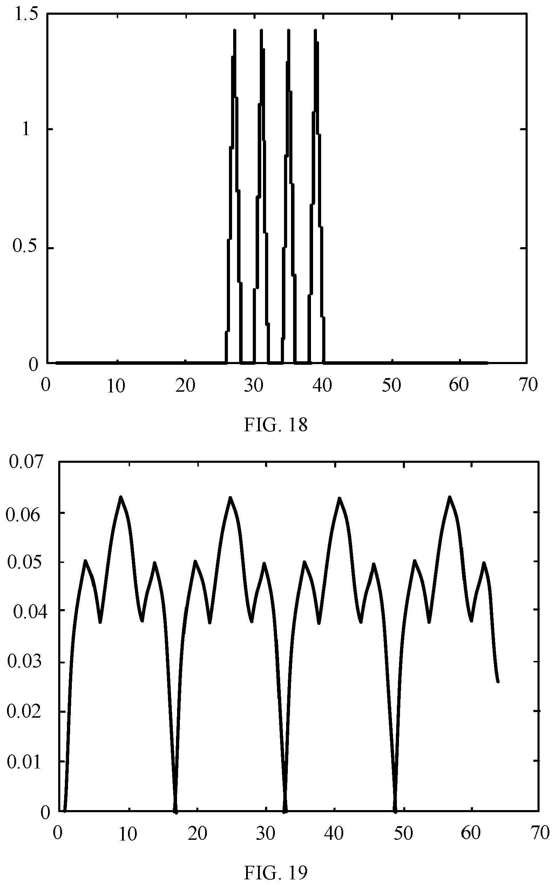

Illustratively, the data corresponding to m first-type sampling points is determined based on first modulation information, where the first modulation information includes at least one of: QPSK modulation information, or QAM modulation information. FIG. 18 is a spectrum diagram where n is 64, m is 4, k is 2, and the data corresponding to the first-type sampling points is determined based on QPSK modulation information. FIG. 19 is a time-domain waveform diagram obtained after performing an IFFT on the sampling points in the spectrum diagram corresponding to FIG. 18.

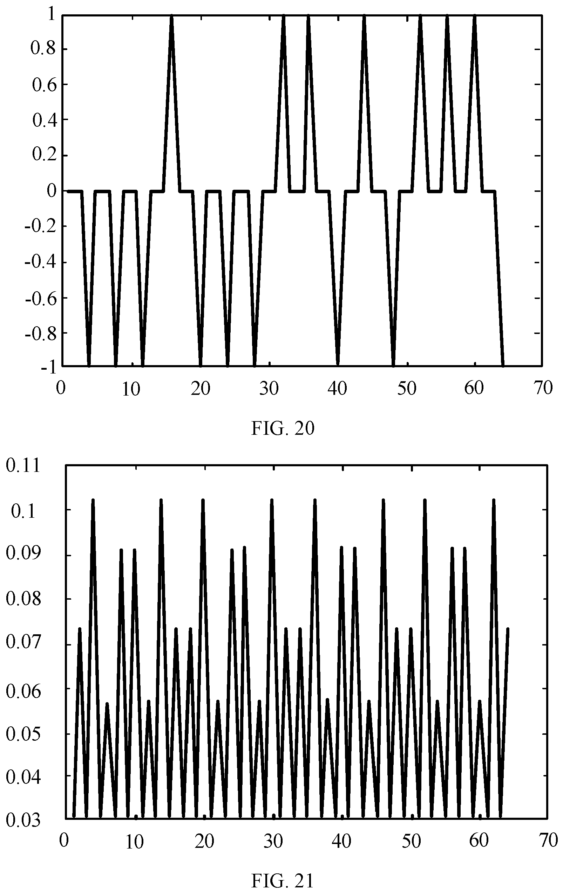

Illustratively, the data corresponding to m first-type sampling points is determined based on a pseudo-random sequence of ±1. FIG. 20 is a spectrum diagram where n is 64, m is 4, k is 2, and the data corresponding to the first-type sampling points is determined based on a pseudo-random sequence of ±1. FIG. 21 is a time-domain waveform diagram obtained after performing an IFFT on the sampling points in the spectrum diagram corresponding to FIG. 20.

In addition to the aforementioned methods of determining the data corresponding to the first-type sampling points using a single type of information, several types of information may be combined for determination. For example, in a case where the first sequence and the pseudo-random sequence of ±1 are combined, and the first sequence is a ZC sequence, the data corresponding to m first-type sampling points is obtained by multiplying the ZC sequence by the pseudo-random sequence of ±1; or, in a case where the first modulation information and the pseudo-random sequence of ±1 are combined, and the first modulation information is QPSK modulation information, the data corresponding to m first-type sampling points is obtained by multiplying the QPSK modulation information by the pseudo-random sequence of ±1. In summary, in the method according to the embodiments of the present disclosure, randomization processing is performed on frequency-domain information during signal generation, thereby ensuring the flattening of the time-domain waveform, avoiding signal distortion and saturation of the power amplifier, and facilitating signal transmission.

### Scheme 2: frequency-domain flattening.

Frequency-domain flattening may be understood as the randomization process applied to the frequency offset calibration signal during its generation. Optionally, the frequency offset calibration signal may be multiplied by a random sequence to obtain a randomized frequency offset calibration signal. The random sequence includes a plurality of random sequence elements, and these random sequence elements fall under at least one of the following scenarios.
·The plurality of random sequence elements are random.
·The random sequence elements corresponding to the time-domain sampling points within a single time-domain unit are the same, while the random sequence elements corresponding to the time-domain sampling points in different time-domain units are random.
·The random sequence elements corresponding to the time-domain sampling points within a single cycle are the same, while the random sequence elements corresponding to the time-domain sampling points in different cycles are random.
·The random sequence elements corresponding to the time-domain sampling points within a single time-domain unit are random, while the random sequence elements corresponding to the time-domain sampling points in different time-domain units are the same.
·The random sequence elements corresponding to the time-domain sampling points within a single cycle are random, while the random sequence elements corresponding to the time-domain sampling points in different cycles are the same.

In some embodiments, when multiplying the frequency offset calibration signal by the random sequence, the i^{th} time-domain sampling point is multiplied by the i^{th} random sequence element in the random sequence. For example, in a case where there are 4 time-domain sampling points with corresponding data {1, 0, 1, 0}, and the random sequence is {x₁, x₂, x₃, x₄}, a randomized result obtained after the multiplication is {x₁, 0, x₃, 0}.

In some embodiments, after randomizing the frequency offset calibration signal, the randomized frequency offset calibration signal is transmitted.

Illustratively, the random sequence elements corresponding to the time-domain sampling points within a single time-domain unit are the same, while the random sequence elements corresponding to the time-domain sampling points in different time-domain units are random. For example, the random sequence elements corresponding to the time-domain sampling points in the first time-domain unit are all 1, the random sequence elements corresponding to the time-domain sampling points in the second time-domain unit are all 2, and the random sequence elements corresponding to the time-domain sampling points in the third time-domain unit are all 3.

Illustratively, the random sequence elements corresponding to the time-domain sampling points within a single cycle are random, while the random sequence elements corresponding to the time-domain sampling points in different cycles are the same. For instance, the random sequence elements corresponding to the time-domain sampling points in different cycles are all "123456".

Upon receiving the frequency offset calibration signal that has undergone frequency-domain flattening, the second device may perform de-randomization processing on the frequency offset calibration signal. De-randomization processing involves multiplying the frequency offset calibration signal by conj(random sequence), where the conj() method may be used to obtain the conjugate value of the random sequence. The frequency offset calibration signal without randomization processing is denoted as A, and the random sequence is denoted as B. The result obtained after performing randomization processing on the frequency offset calibration signal is A*B. De-randomization is equivalent to A*B*conj(B). Since conj(B) is the conjugate value of B, B*conj(B) results in |B|², which is the square of the modulus of the random sequence. Therefore, the frequency offset calibration signal A without randomization processing can be calculated.

In summary, in the method according to the embodiments of the present disclosure, randomization processing is performed during the generation of frequency offset calibration signals, which can alleviate the concentrated spectral energy, flatten the spectral energy, and thereby enhance frequency selectivity and anti-interference capability.

In some embodiments, step 410 and step 420 can be implemented as independent embodiments, such as being implemented separately as a frequency sweep range expansion method or a signal waveform determination method; scheme 1 can be implemented as an independent embodiment, such as being implemented separately as a time-domain flattening method; scheme 2 can be implemented as an independent embodiment, such as being implemented separately as a frequency-domain flattening method or a signal randomization method; step 210, step 410, and step 420 can be implemented as independent embodiments; step 210 and scheme 1 can be implemented as independent embodiments; step 210 and scheme 2 can be implemented as independent embodiments; step 210, step 410, step 420, and scheme 1 can be implemented as independent embodiments; step 210, step 410, step 420, and scheme 2 can be implemented as independent embodiments; step 210, step 410, step 420, scheme 1, and scheme 2 can be implemented as independent embodiments. Step 310, step 410, and step 420 can be implemented as independent embodiments; step 310 and scheme 1 can be implemented as independent embodiments; step 310 and scheme 2 can be implemented as independent embodiments; step 310, step 410, step 420, and scheme 1 can be implemented as independent embodiments; step 310, step 410, step 420, and scheme 2 can be implemented as independent embodiments; step 310, step 410, step 420, scheme 1, and scheme 2 can be implemented as independent embodiments.

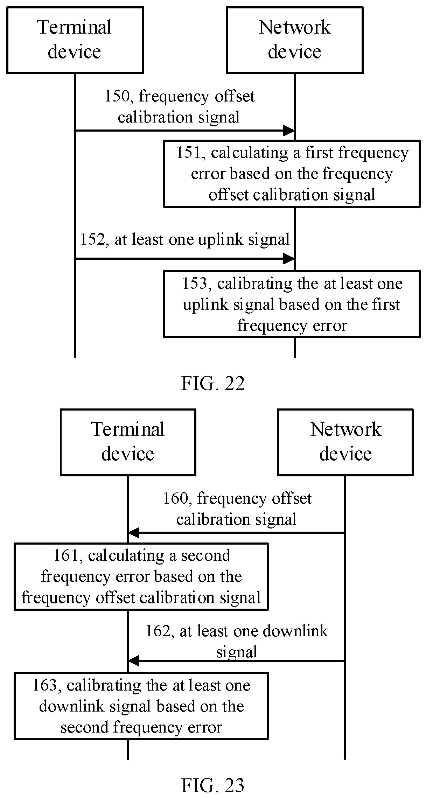

FIG. 22 is an overall flowchart of a method for calibrating frequency offset according to an exemplary embodiment of the present disclosure. The method includes the following steps.

**In step 150**, the terminal device transmits a frequency offset calibration signal to the network device.

In some embodiments, the terminal device transmits a frequency offset calibration signal to the network device. The frequency offset calibration signal includes at least two sub-signals for frequency offset calibration. Each of the at least two sub-signals is a part of the frequency offset calibration signal, and the at least two sub-signals are the same. Due to an error in the oscillator used by the terminal device, there is an error between the theoretical frequency and the actual frequency of the at least two sub-signals. For example, the at least two sub-signals are transmitted with a target frequency of 100 kHz, but due to an error in the oscillator used by the terminal device, the actual frequency at the time of transmitting the at least two sub-signals is 120 kHz.

**In step 151,** the network device calculates a first frequency error based on the frequency offset calibration signal.

In some embodiments, the network device calculates a first frequency error based on the received frequency offset calibration signal, that is, the network device calculates the first frequency error based on at least two received sub-signals. The first frequency error includes at least one of: an error caused by an error in the oscillator used by the terminal device, or an error generated during the transmission of the uplink signal.

**In step 152,** the terminal device transmits at least one uplink signal to the network device.

In some embodiments, the terminal device transmits at least one uplink signal to the network device. The at least one uplink signal is transmitted after the aforementioned frequency offset calibration signal is transmitted; or, the at least one uplink signal is transmitted simultaneously with the aforementioned frequency offset calibration signal; or, the at least one uplink signal includes the aforementioned frequency offset calibration signal.

**In step 153,** the network device calibrates the at least one uplink signal based on the first frequency error.

In some embodiments, the network device calibrates the at least one uplink signal based on the calculated first frequency error.

In some embodiments, step 150 and step 152 may be performed simultaneously; step 151 and step 152 may be exchanged in order or performed simultaneously.

In summary, in the method according to the embodiments of the present disclosure, a frequency offset calibration method is used to calibrate the uplink signal transmitted by the terminal device, which includes the first frequency error. The first frequency error is calculated based on the frequency offset calibration signal. This method is simple to operate and can calibrate the frequency offset caused by the error of the oscillator in ambient IoT devices.

FIG. 23 is an overall flowchart of a method for calibrating frequency offset according to an exemplary embodiment of the present disclosure. The method includes the following steps.

**In step 160,** the network device transmits a frequency offset calibration signal to the terminal device.

In some embodiments, the network device transmits a frequency offset calibration signal to the terminal device. The frequency offset calibration signal includes at least two sub-signals for frequency offset calibration. Each of the at least two sub-signals is a part of the frequency offset calibration signal, and the at least two sub-signals are the same. Due to the high frequency accuracy of the oscillator used by the network device, errors are generally not generated. However, Doppler shift may occur during the transmission of the frequency offset calibration signal.

**In step 161,** the terminal device calculates a second frequency error based on the frequency offset calibration signal.

In some embodiments, due to the mismatch between the oscillator of the terminal device and the oscillator of the access network device, errors may be generated when the terminal device receives the frequency offset calibration signal.

In some embodiments, the terminal device calculates a second frequency error based on the received frequency offset calibration signal, that is, the terminal device calculates the second frequency error based on at least two received sub-signals. The second frequency error includes at least one of: an error caused by an error of the oscillator used by the terminal device, or an error generated during the transmission of the downlink signal.

**In step 162,** the network device transmits at least one downlink signal to the terminal device.

In some embodiments, the network device transmits at least one downlink signal to the terminal device. The at least one downlink signal is transmitted after the aforementioned frequency offset calibration signal is transmitted; or, the at least one downlink signal is transmitted simultaneously with the aforementioned frequency offset calibration signal; or, the at least one downlink signal includes the aforementioned frequency offset calibration signal.

**In step 163,** the terminal device calibrates the at least one downlink signal based on the second frequency error.

In some embodiments, the terminal device calibrates the at least one downlink signal based on the calculated second frequency error.

In some embodiments, step 160 and step 162 may be performed simultaneously; step 161 and step 162 may be performed in an exchanged order or simultaneously.

In summary, in the method according to the embodiments of the present disclosure, a frequency offset calibration method is used to calibrate the downlink signal transmitted by the network device, which includes the second frequency error. The second frequency error is calculated based on the frequency offset calibration signal. This method is simple to operate and can be applied to ambient IoT devices for frequency offset calibration.

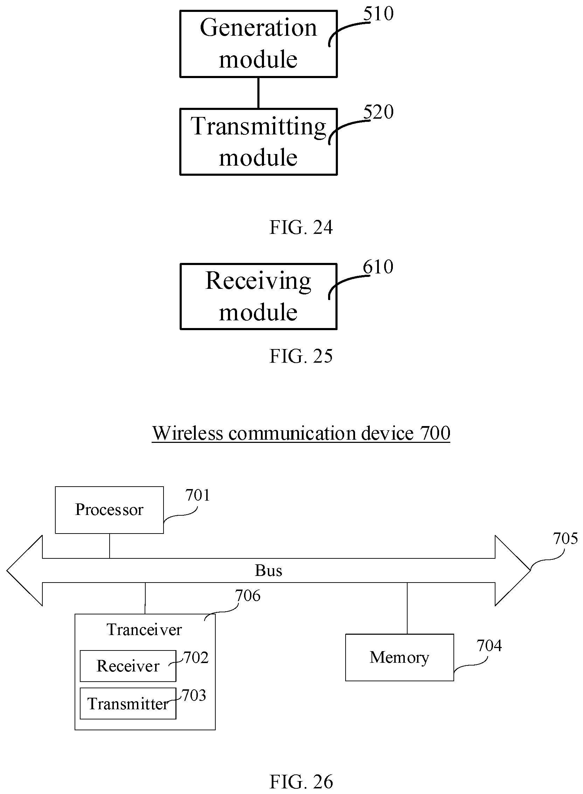

FIG. 24 is a structural block diagram of an apparatus for calibrating frequency offset according to an exemplary embodiment of the present disclosure. The apparatus may be implemented as a part of a first device. The first device may be a network device or a terminal device as shown in FIG. 6. The apparatus includes as follows.

**A generation module 510 is configured to** generate a frequency offset calibration signal, wherein the frequency offset calibration signal includes at least two sub-signals for frequency offset calibration; and each of the at least two sub-signals is a part of the frequency offset calibration signal, and the at least two sub-signals are the same.

In some embodiments, the at least two sub-signals being the same includes being the same in at least one of the following aspects: a waveform, data, a length, a phase, a sequence used to generate the at least two sub-signals, or a formula used to generate the at least two sub-signals.

In some embodiments, the at least two sub-signals being the same in the waveform means, in other words, that the at least two sub-signals have the same data; it may also be said that the sequence used to generate the at least two sub-signals is the same, or the formula used to generate the at least two sub-signals is the same.

In some embodiments, since the at least two sub-signals are the same, the at least two sub-signals have the same length, which also means that the at least two sub-signals have the same phase.

In some embodiments, the at least two sub-signals include a first sub-signal and a second sub-signal. The first sub-signal and the second sub-signal are two consecutive parts of a frequency offset calibration signal; or, the first sub-signal and the second sub-signal are two partially overlapping parts of a frequency offset calibration signal. As shown in FIG. 8, a frequency offset calibration signal 10 includes at least two sub-signals, which include a first sub-signal 11 and a second sub-signal 12. The schematic diagram (1) of FIG. 8 illustrates the case where the first sub-signal 11 and the second sub-signal 12 are two consecutive parts of the frequency offset calibration signal 10. The schematic diagram (2) of FIG. 8 illustrates the case where the first sub-signal 11 and the second sub-signal 12 are two partially overlapping parts of the frequency offset calibration signal 10.

In some embodiments, the at least two sub-signals use at least one of: an OFDM waveform, a mixed waveform of an OFMD waveform and an OOK waveform, a triangle waveform, a square waveform, or a pulse waveform.

In some embodiments, the subcarrier spacing takes at least one of the following values: 15 kHz, 30 kHz, 60 kHz, 120 kHz, 240 kHz, 480 kHz, 312.5 kHz, or 31.25 kHz. It should be noted that the subcarrier spacing may also take any value other than the aforementioned values for the subcarrier spacing, and the embodiments of the present disclosure do not list all possible values herein. Optionally, the subcarrier spacing of 15 kHz, 30 kHz, 60 kHz, 120 kHz, 240 kHz, or 480 kHz is compatible with the NR system; the subcarrier spacing of 312.5 kHz or 31.25 kHz is compatible with the Wi-Fi system.

In some embodiments, the frequency offset calibration signal is a periodic signal. One cycle of the frequency offset calibration signal is a cycle of a smallest sub-signal that repeatedly appears in the frequency offset calibration signal; or, one cycle of the frequency offset calibration signal is a time-domain length occupied by the smallest sub-signal that repeatedly appears in the frequency offset calibration signal. Each of at least two sub-signals includes at least one smallest sub-signal.

In some embodiments, each of the at least two sub-signals occupies a duration in the time domain that is not less than one time-domain unit, or occupies a duration in the time domain that is less than one time-domain unit. Optionally, in a case where each sub-signal occupies a duration in the time domain that is not less than one time-domain unit, the duration each sub-signal occupies in the time domain is an integer multiple of one time-domain unit, or the duration each sub-signal occupies in the time domain is not an integer multiple of one time-domain unit.

The time-domain unit is at least one of: a frame, a subframe, a slot, or a symbol. Optionally, the time length of a frame is defined as 10 ms; a frame includes 10 subframes, and the time length of a subframe is 1 ms; a subframe includes i slots, where i is a positive integer, and the value of i is related to the subcarrier spacing (the larger the subcarrier spacing, the shorter the actual time length of a slot); a slot includes 14 symbols, which may be OFDM symbols. It should be noted that the time length of a frame may also be defined as other durations, such as 15 ms, 20 ms, etc., and this is not limited in the embodiments of the present disclosure.

Since the frequency offset calibration signal is a periodic signal, one time-domain unit includes a plurality of cycles of the frequency offset calibration signal; or, one time-domain unit includes one cycle of the frequency offset calibration signal.

In some embodiments, each of the at least two sub-signals occupies a plurality of time-domain units in the time domain; or, occupies one time-domain unit in the time domain; or, the duration occupied in the time domain is not a positive integer multiple of one time-domain unit; or, the duration occupied in the time domain is less than one time-domain unit.

Illustratively, one time-domain unit is one symbol. Each of at least two sub-signals occupies 2 symbols in the time domain; or, occupies 1 symbol in the time domain; or, occupies 2.5 symbols in the time domain; or, occupies 0.5 symbols in the time domain.

In some embodiments, since one time-domain unit includes one or a plurality of cycles of a frequency offset calibration signal, each of at least two sub-signals includes, in the time domain: one or a plurality of cycles, a portion of one cycle, or a non-integer multiple of one cycle of the frequency offset calibration signal. For example, each sub-signal includes 1 cycle, 2 cycles, 0.5 cycles, or 2.5 cycles of the frequency offset calibration signal in the time domain.

In some embodiments, an interval of a time-domain start position of each sub-signal in the at least two sub-signals is a positive integer multiple of a cycle. This cycle is the cycle of the frequency offset calibration signal.

In some embodiments, an interval of a time-domain start position of each sub-signal in at least two sub-signals is less than one time-domain unit. For example, in a case where the time-domain unit is one symbol, as shown in schematic diagram (1) of FIG. 8, the first sub-signal 11 and the second sub-signal 12 occupy one symbol, and the interval between the time-domain start positions of the first sub-signal 11 and the second sub-signal 12 is half a symbol, that is, half a time-domain unit.

**A transmitting module 520 is configured to** transmit the frequency offset calibration signal to a second device.

Frequency offset may also be referred to as CFO. The causes of frequency offset include at least one of: first, a clock difference between the transmitting end and the receiving end of the signal, which is caused by the mismatch between the oscillators at the transmitting end and the receiving end; second, Doppler shift occurring during the spatial transmission of the signal.

In some embodiments, in order to acquire the frequency offset between the first device and the second device for frequency offset calibration, the first device transmits a frequency offset calibration signal to the second device. The frequency offset calibration signal includes at least two sub-signals for frequency offset calibration, and each of the at least two sub-signals is a part of the frequency offset calibration signal and the at least two sub-signals are the same.

In summary, the apparatus according to the embodiments of the present disclosure performs frequency offset calibration by transmitting a frequency offset calibration signal, which includes at least two sub-signals for frequency offset calibration. These at least two sub-signals are the same. The apparatus does not require a large amount of storage or computing resources, nor does it require complex calculations to achieve frequency offset calibration, making it suitable for devices with simple structures such as ambient IoT devices.

FIG. 25 is a structural block diagram of an apparatus for calibrating frequency offset according to an exemplary embodiment of the present disclosure. The apparatus may be implemented as a part of a second device. The second device may be a network device or a terminal device as shown in FIG. 6. The apparatus includes as follows.

**A receiving module 610 is configured to** receive a frequency offset calibration signal transmitted by a first device, wherein the frequency offset calibration signal includes at least two sub-signals for frequency offset calibration; and each of the at least two sub-signals is a part of the frequency offset calibration signal, and the at least two sub-signals are the same when being transmitted.

Frequency offset may also be referred to as CFO. The causes of frequency offset include at least one of: first, a clock difference between the transmitting end and the receiving end of the signal, which is caused by the mismatch between the oscillators at the transmitting end and the receiving end; second, Doppler shift occurring during the spatial transmission of the signal.

In some embodiments, in order to acquire the frequency offset between the first device and the second device for frequency offset calibration, the second device receives a frequency offset calibration signal transmitted from the first device. The frequency offset calibration signal includes at least two sub-signals for frequency offset calibration; and each of the at least two sub-signals is a part of the frequency offset calibration signal, and the at least two sub-signals are the same when being transmitted.

In some embodiments, the at least two sub-signals being the same includes being the same in at least one of the following aspects: a waveform, data, a length, a phase, a sequence used to generate the at least two sub-signals, or a formula used to generate the at least two sub-signals.

In some embodiments, the at least two sub-signals being the same in the waveform means, in other words, that the at least two sub-signals have the same data; it may also be said that the sequence used to generate the at least two sub-signals is the same, or the formula used to generate the at least two sub-signals is the same.

In some embodiments, since the at least two sub-signals are the same, the at least two sub-signals have the same length, which also means that the at least two sub-signals have the same phase.

In some embodiments, the at least two sub-signals include a first sub-signal and a second sub-signal. The first sub-signal and the second sub-signal are two consecutive parts of a frequency offset calibration signal; or, the first sub-signal and the second sub-signal are two partially overlapping parts of a frequency offset calibration signal. As shown in FIG. 8, a frequency offset calibration signal 10 includes at least two sub-signals, which include a first sub-signal 11 and a second sub-signal 12. The schematic diagram (1) of FIG. 8 illustrates the case where the first sub-signal 11 and the second sub-signal 12 are two consecutive parts of the frequency offset calibration signal 10. The schematic diagram (2) of FIG. 8 illustrates the case where the first sub-signal 11 and the second sub-signal 12 are two partially overlapping parts of the frequency offset calibration signal 10.

In some embodiments, the at least two sub-signals use at least one of: an OFDM waveform, a mixed waveform of an OFMD waveform and an OOK waveform, a triangle waveform, a square waveform, or a pulse waveform.

In some embodiments, the subcarrier spacing takes at least one of the following values: 15 kHz, 30 kHz, 60 kHz, 120 kHz, 240 kHz, 480 kHz, 312.5 kHz, or 31.25 kHz. It should be noted that the subcarrier spacing may also take any value other than the aforementioned values for the subcarrier spacing, and the embodiments of the present disclosure do not list all possible values herein. Optionally, the subcarrier spacing of 15 kHz, 30 kHz, 60 kHz, 120 kHz, 240 kHz, or 480 kHz is compatible with the NR system; the subcarrier spacing of 312.5 kHz or 31.25 kHz is compatible with the Wi-Fi system.

In some embodiments, the frequency offset calibration signal is a periodic signal. One cycle of the frequency offset calibration signal is a cycle of a smallest sub-signal that repeatedly appears in the frequency offset calibration signal; or, one cycle of the frequency offset calibration signal is a time-domain length occupied by the smallest sub-signal that repeatedly appears in the frequency offset calibration signal. Each of at least two sub-signals includes at least one smallest sub-signal.

In some embodiments, each of at least two sub-signals occupies a duration in the time domain that is not less than one time-domain unit, or occupies a duration in the time domain that is less than one time-domain unit. Optionally, in a case where each sub-signal occupies a duration in the time domain that is not less than one time-domain unit, the duration each sub-signal occupies in the time domain is an integer multiple of one time-domain unit, or the duration each sub-signal occupies in the time domain is not an integer multiple of one time-domain unit.

The time-domain unit is at least one of: a frame, a subframe, a slot, or a symbol. Optionally, the time length of a frame is defined as 10 ms; a frame includes 10 subframes, and the time length of a subframe is 1 ms; a subframe includes i slots, where i is a positive integer, and the value of i is related to the subcarrier spacing (the larger the subcarrier spacing, the shorter the actual time length of a slot); a slot includes 14 symbols, which may be OFDM symbols. It should be noted that the time length of a frame may also be defined as other durations, such as 15 ms, 20 ms, etc., and this is not limited in the embodiments of the present disclosure.

Since the frequency offset calibration signal is a periodic signal, one time-domain unit includes a plurality of cycles of the frequency offset calibration signal; or, one time-domain unit includes one cycle of the frequency offset calibration signal.

In some embodiments, each of the at least two sub-signals occupies a plurality of time-domain units in the time domain; or, occupies one time-domain unit in the time domain; or, the duration occupied in the time domain is not a positive integer multiple of one time-domain unit, or, the duration occupied in the time domain is less than one time-domain unit.

Illustratively, one time-domain unit is one symbol. Each of at least two sub-signals occupies 2 symbols in the time domain; or, occupies 1 symbol in the time domain; or, occupies 2.5 symbols in the time domain; or, occupies 0.5 symbols in the time domain.

In some embodiments, since one time-domain unit includes one or a plurality of cycles of a frequency offset calibration signal, each of at least two sub-signals includes, in the time domain: one or a plurality of cycles, or a portion of one cycle, or a non-integer multiple of one cycle of the frequency offset calibration signal. For example, each sub-signal includes 1 cycle, 2 cycles, 0.5 cycles, or 2.5 cycles of the frequency offset calibration signal in the time domain.

In some embodiments, an interval of a time-domain start position of each sub-signal in at least two sub-signals is a positive integer multiple of a cycle. This cycle is the cycle of the frequency offset calibration signal.

In some embodiments, an interval of a time-domain start position of each sub-signal in at least two sub-signals is less than one time-domain unit. For example, in a case where the time-domain unit is one symbol, as shown in schematic diagram (1) of FIG. 8, the first sub-signal 11 and the second sub-signal 12 occupy one symbol, and the interval between the time-domain start positions of the first sub-signal 11 and the second sub-signal 12 is half a symbol, that is, half a time-domain unit.

In some embodiments, the second device receives signals transmitted by the first device. In a case where the first device is a terminal device and the second device is an access network device, the second device receives uplink signals transmitted by the first device. In a case where the first device is an access network device and the second device is a terminal device, the second device receives downlink signals transmitted by the first device.

**The receiving module 610 is also configured for** the second device to perform frequency offset calibration based on at least two sub-signals used for frequency offset calibration. Illustratively, the second device performs frequency offset calibration on an uplink signal based on at least two sub-signals used for frequency offset calibration, wherein the uplink signal includes the at least two sub-signals; or, the second device performs frequency offset calibration on a downlink signal based on at least two sub-signals used for frequency offset calibration, wherein the downlink signal includes the at least two sub-signals.

**The receiving module 610 is also configured for** the access network device to calibrate a first frequency error using at least two sub-signals. The first frequency error is an error generated when the terminal device transmits an uplink signal, and the error includes at least one of: an error caused by an error in the oscillator used by the terminal device, or an error generated during the transmission of the uplink signal, wherein the uplink signal includes the at least two sub-signals.

**Alternatively, the receiving module 610 is also configured for** the terminal device to calibrate a second frequency error using at least two sub-signals. The second frequency error is an error generated when the terminal device receives a downlink signal, and the error includes at least one of: an error caused by an error in the oscillator used by the terminal device, or an error generated during the transmission of the downlink signal. The downlink signal includes at least two sub-signals.

Illustratively, the terminal device uses an RC oscillator or an LC oscillator, both of which may cause errors when the terminal device transmits an uplink signal and receives a downlink signal. When the terminal device transmits an uplink signal, due to an error in the frequency accuracy of the oscillator, there is an error between the actual frequency and the theoretical frequency of the uplink signal transmitted by the terminal device; and in addition, during the transmission of the uplink signal, Doppler shift may occur, resulting in a first frequency error in the uplink signal received by the access network device. This first frequency error includes at least one of: an error caused by an error in the oscillator used by the terminal, or an error generated during the transmission of the uplink signal. When the access network device transmits a downlink signal, due to the high frequency accuracy of the oscillator used by the access network device, errors generally do not occur. However, Doppler shift may occur during the transmission of the downlink signal; and due to the mismatch between the oscillator of the terminal device and the oscillator of the access network device, errors may occur when the terminal device receives the downlink signal. Therefore, the downlink signal received by the terminal device have a second frequency error, which includes at least one of: an error caused by an error in the oscillator used by the terminal device, or an error generated during the transmission of the downlink signal. After receiving the uplink signal or the downlink signal, the second device performs frequency offset calibration on the uplink signal or the downlink signal based on at least two sub-signals in the uplink signal or the downlink signal.

In some embodiments, the terminal device does not perform frequency offset calibration when transmitting the uplink signal, but still transmits the uplink signal according to the theoretical frequency. Upon receiving the uplink signal, the access network device calculates the frequency offset based on at least two sub-signals used for frequency offset calibration to perform calibration.

In summary, the apparatus according to the embodiments of the present disclosure performs frequency offset calibration based on at least two sub-signals in the received signal. This apparatus does not require a large amount of storage or computing resources, nor does it require complex calculations to achieve frequency offset calibration, making it suitable for devices with simple structures such as ambient IoT devices.

The signal may be represented in complex form, and thus two consecutive sub-signals received by the second device may be expressed as: ${r}_{1} \left(n\right) = r \left(n\right) = {x}_{1} \left(n\right) ∗ {exp}^{\left(-j∗\left(2∗pi∗f∗n∗{T}_{s}+φ\right)\right)} + η \left({nT}_{s}\right)$ ${r}_{2} \left(n\right) = r \left(n+{N}_{d}\right) = {x}_{2} \left(n\right) ∗ {exp}^{\left(-j∗\left(2∗pi∗f∗\left(n+{N}_{d}\right)∗{T}_{s}\right)+φ\right)} + η \left({nT}_{s}\right)$

In the formula, *r*₁(*n*) represents the first sub-signal received by the second device; *r*₂(*n*) represents the second sub-signal received by the second device; *x*₁(*n*) represents the first sub-signal transmitted by the first device; *x*₂(*n*) represents the second sub-signal transmitted by the first device; *η*(*nTₛ*) represents noise; n represents the sampling point ordering (for example, *r*₁(1) may represent the 1^{st} sampling point in at least two sub-signals); *Tₛ* represents the time interval between sampling points;*exp*^{(*-j**(2**pi***f***n*T*ₛ+*φ*))} represents the frequency error corresponding to the first sub-signal; *exp*^{(*-jj**(2**pi***f**(*n*+*N*_{d})**T*ₛ)+*φ*)} represents the frequency error corresponding to the second sub-signal; *exp^{j}* represents the exponential form of a complex number, where j is the imaginary unit; *pi* is π; *f* represents the frequency offset; *N_{d}* represents the transmission time interval between two consecutive sub-signals, and *N_{d}* may also be referred to as the interval of the time-domain start position of each sub-signal in at least two sub-signals; *φ* represents the initial phase.

By multiplying the first sub-signal by the conjugate complex number of the second sub-signal, the following is obtained: $R = {\sum }_{n = 0}^{L - 1} {r}_{1} \left(n\right) {r}_{2}^{∗} \left(n\right)$

In the formula, R represents the result of the conjugate multiplication; L represents the data length of the first sub-signal and the second sub-signal, i.e., the number of sampling points; ${r}_{2}^{∗} \left(n\right)$ represents the conjugate complex number of *r*₂(*n*).

After expanding this formula, the following can be obtained: $R = {exp}^{j ∗ 2 ∗ pi ∗ f ∗ {N}_{d} ∗ {T}_{s}} {\sum }_{n = 0}^{L - 1} {x}_{1} \left(n\right) {x}_{2}^{*} \left(n\right) + η$

In the formula, *η* represents noise; ${x}_{2}^{∗} \left(n\right)$ represents the conjugate complex number of *x*₂(*n*).

Among them, since at least two sub-signals are the same, *x*₁(*n*) = *x*₂(*n*). If the impact of noise on the signal is ignored, the above formula can be expressed as: $R = {exp}^{j ∗ 2 ∗ pi ∗ f ∗ {N}_{d} ∗ {T}_{s}} {\sum }_{n = 0}^{L - 1} {x}_{1} {\left(n\right)}^{2}$

It can be derived that: $arg \left(R\right) = 2 ∗ pi ∗ f ∗ {N}_{d} ∗ {T}_{s}$

In the formula, arg(R) represents the principal argument angle of the complex number R.

Therefore, the frequency offset f can be expressed as: $f = \frac{arg \left(R\right) ∗ {f}_{s}}{2 ∗ pi ∗ {N}_{d}}$

In the formula, *fₛ* represents the sampling rate, and *fₛ* represents the reciprocal of *T_{S}.*

In some embodiments, the frequency offset *f* includes at least one of: an error caused by an error in the oscillator used by the terminal, or an error generated during signal transmission.

It can also be derived that the frequency offset range is: $\left|f\right| \leq \frac{{f}_{s}}{2 ∗ {N}_{d}}$

In some embodiments, the frequency offset range may also be referred to as the frequency sweep range. As can be seen from the above formula, the frequency sweep range is related to the sampling rate *fₛ* and the transmission time interval *N_{d}* between two consecutive sub-signals. The smaller the transmission time interval *N_{d}* between two consecutive sub-signals (i.e., the interval of the time-domain start position of each sub-signal in at least two sub-signals), the larger the frequency sweep range.

The larger the frequency sweep range, the greater the frequency offset range that can be calibrated, which means the larger the error range allowed when the first device transmits signals, or the larger the error range allowed when the second device receives signals. When the second device receives signals, if the actual frequency error of the signal transmitted exceeds the frequency sweep range, it may prevent the second device from performing frequency offset calibration on the received signal. To expand the frequency sweep range, the following methods are adopted.

Description is provided hereinafter by taking at least two sub-signals as two sub-signals and the time-domain unit as a symbol for example; however, the present disclosure is not limited thereto.

An IFFT is performed on n frequency-domain sampling points to obtain corresponding n time-domain sampling points, wherein the n time-domain sampling points are time-domain sampling points of one time-domain unit in the frequency offset calibration signal.

In some embodiments, the frequency offset calibration signal includes n time-domain sampling points within a time-domain unit, and the data corresponding to the n time-domain sampling points is obtained by performing an IFFT on the data corresponding to n frequency-domain sampling points. Optionally, the n frequency-domain sampling points include m first-type sampling points with corresponding non-zero data. Here, the interval between any two adjacent first-type sampling points is the same and is equal to 2^{k} frequency-domain sampling intervals, where m is a positive integer greater than or equal to 2, n is a positive integer greater than or equal to m, and k is a non-negative integer. Specifically, 2^{k} refers to 2 raised to the power of k. As shown in FIG. 10, there are a total of n frequency-domain sampling points, which include m first-type sampling points. The data corresponding to the first-type sampling points is not zero, and the interval between two adjacent first-type sampling points is equal to 2^{k} frequency-domain sampling intervals.

In some embodiments, the data corresponding to the frequency-domain sampling points other than the m first-type sampling points among the n frequency-domain sampling points is zero.

In some embodiments, the frequency-domain sampling interval 2^{k} is the absolute value of the difference between two adjacent first-type sampling points. In a case where k is 0, n is 64, and m is 64, it means all 64 frequency-domain sampling points are the first-type sampling points. In a case where k is 1 and n is 64, it means m is a positive integer not greater than 32; for example, the 1^{st} first-type sampling point corresponds to the 1^{st} frequency-domain sampling point, and the 2^{nd} first-type sampling point corresponds to the 3^{rd} frequency-domain sampling point.

Each symbol obtained in this way is composed of 2^{k} segments of repeated data, and the signal waveform formed by the symbols appears as a repetitive waveform. Each symbol obtained in this way is composed of 2^{k} segments of repeated data, and the signal waveform formed by the symbols appears as a repetitive waveform. In a case where the frequency-domain sampling interval is 2^{k}, the number of the repeated data segments corresponding to one symbol after an IFFT is also 2^{k}, that is, 2^{k} repetitive waveforms. Therefore, two sub-signals only need to be separated by one repetitive waveform for transmission, such that they do not interfere with each other, which means that the transmission time interval *N_{d}* between the two signals is reduced to the length of $\frac{1}{{2}^{k}}$ symbols. According to the formula for frequency offset *f* described above, when the transmission time interval *N^{d}* between two sub-signals is reduced to the length of $\frac{1}{{2}^{k}}$ symbols, the frequency sweep range is expanded to ±2^{*k*-1} × *g kHz*, where g is the subcarrier spacing selected during transmission.

Regarding the positional distribution of m first-type sampling points among n frequency-domain sampling points, at least one of the following three distribution modes is included.

**Distribution mode 1:** The sampling point positions of the m first-type sampling points include the first and/or the last frequency-domain sampling point among the n frequency-domain sampling points; or, the sampling point positions of the m first-type sampling points do not include the first and/or the last frequency-domain sampling point among the n frequency-domain sampling points.

**Distribution mode 2:** The sampling point positions of m first-type sampling points are centralized positions of n frequency-domain sampling points; or, the sampling point positions of m first-type sampling points are not centralized positions of n frequency-domain sampling points.

**Distribution mode 3:** The sampling point positions of m first-type sampling points are symmetrical positions of n frequency-domain sampling points; or, the sampling point positions of m first-type sampling points are asymmetrical positions of n frequency-domain sampling points.

In some embodiments, centralized positions may be understood as not including the first and/or the last frequency-domain sampling point; non-centralized positions may be understood as including the first and/or the last frequency-domain sampling point among the n frequency-domain sampling points.

Among them, distribution mode 2 and distribution mode 3 can be combined. For example, the sampling point positions of m first-type sampling points are centralized symmetrical positions of n frequency-domain sampling points; or, the sampling point positions of m first-type sampling points are centralized asymmetrical positions of n frequency-domain sampling points; or, the sampling point positions of m first-type sampling points are non-centralized symmetrical positions of n frequency-domain sampling points; or, the sampling point positions of m first-type sampling points are non-centralized asymmetrical positions of n frequency-domain sampling points.

The sampling point positions of m first-type sampling points are symmetrical positions of n frequency-domain sampling points, representing centrosymmetric. For example, in a case where n is 8 and k is 0 (i.e., the interval between two adjacent first-type sampling points is 1) and m is 2, and the sampling point positions of the first-type sampling points are symmetrical positions of the frequency-domain sampling points, the first-type sampling points are respectively the 4^{th} and 5^{th} frequency-domain sampling points. This case may also be referred to as the sampling point positions of the first-type sampling points being centralized positions of the frequency-domain sampling points, or the sampling point positions of the first-type sampling points not including the first and/or last frequency-domain sampling points among the frequency-domain sampling points. In a case where n is 8 and k is 3 (i.e., the interval between two adjacent first-type sampling points is 8), and m is 2, and the sampling point positions of the first-type sampling points are symmetrical positions of the frequency-domain sampling points, the first-type sampling points are respectively the 1^{st} and 8^{th} frequency-domain sampling points. This case may also be referred to as the sampling point positions of the first-type sampling points being non-centralized positions of the frequency-domain sampling points, or the sampling point positions of the first-type sampling points including the first and/or last frequency-domain sampling points among the frequency-domain sampling points.

Illustratively, in a case where n is 64 (i.e., there are 64 sampling points), and m is 4 and k is 2, if the sampling point positions of the 4 first-type sampling points are centralized asymmetrical positions of the 64 frequency-domain sampling points, the sampling point positions of the 4 first-type sampling points may be, for example, 27, 31, 35, and 39. Alternatively, in a case where m is 4 and the sampling point positions of the 4 first-type sampling points are non-centralized asymmetrical positions of the 64 frequency-domain sampling points, the sampling point positions of the 4 first-type sampling points may be, for example, 1, 5, 9, and 13; or 7, 11, 15, and 19; or 45, 49, 53, and 57. Alternatively, in a case where m is 4 and k is 2, and the sampling point positions of the 4 first-type sampling points are centralized symmetrical positions of the 64 frequency-domain sampling points, the sampling positions of the 4 first-type sampling points may be, for example, 26, 30, 34, and 38.

Illustratively, for one symbol, n is 64, i.e., there are 64 sampling points in one symbol. In a case where m is 2 and k is 1, the spectrum diagram corresponding to the symbol is as shown in FIG. 11, where the 31^{st} and 33^{rd} sampling points are set as the first-type sampling points, and the data corresponding to the first-type sampling points is 1; the data corresponding to the frequency-domain sampling points other than the m first-type sampling points is 0. A time-domain waveform corresponding to one symbol, as shown in FIG. 12, is obtained by performing an IFFT on the 64 frequency-domain sampling points in the spectrum as shown in FIG. 11. When the waveform of a symbol is the waveform shown in FIG. 12, each symbol is composed of two completely repeated data segments, and the transmission time interval *N_{d}* between two consecutive signals is reduced to half a symbol length, as shown in FIG. 13. In this case, the frequency sweep range is expanded to one subcarrier spacing. In a case where m is 4 and k is 2, the spectrum diagram corresponding to the symbol is as shown in FIG. 14, where the sampling point positions of the first-type sampling points are centralized asymmetric positions of the 64 frequency-domain sampling points. A time-domain waveform corresponding to one symbol, as shown in FIG. 15, is obtained by performing an IFFT on the 64 frequency-domain sampling points in the spectrum as shown in FIG. 14. When the waveform of a symbol is the waveform shown in FIG. 15, each symbol is composed of four completely repeated data segments, and the transmission time interval *N_{d}* between two consecutive signals is reduced to 1/4 of a symbol length. In this case, the frequency sweep range is expanded to two subcarrier spacings.

It should be noted that the value of k may be 0. In a case where the value of k is set to 0, for a time-domain waveform corresponding to one symbol that is obtained by performing an IFFT on 64 frequency-domain sampling points in the spectrum, there is no repeated data within the time-domain waveform. In this case, the transmission time interval *N_{d}* between two consecutive signals is one symbol length, and the frequency sweep range is half a subcarrier spacing.

In summary, the apparatus according to the embodiments of the present disclosure enables the interval of the time-domain start position of each sub-signal in at least two sub-signals is less than one time-domain unit, thereby expanding the frequency sweep range. The second device using this apparatus does not need to perform special processing when receiving signals, such that no additional resource consumption is imposed on the second device.

In the aforementioned solutions, the frequency sweep range is expanded, but the resulting waveform is not flat in both the time and frequency domains. The non-flat waveform implies that the energy is relatively concentrated when the signal is transmitted, which is not conducive to signal transmission. Therefore, the following two schemes are proposed. It should be noted that the following two schemes can be implemented simultaneously or alternatively.
Scheme 1: time-domain flattening.
Scheme 2: frequency-domain flattening.

The two aforementioned implementation methods are introduced in sequence hereinafter, but the order of introduction does not necessarily reflect the relative merits of the two methods.

### Scheme 1: time-domain flattening.

Time-domain flattening involves processing the first-type sampling points in the spectrogram. The data corresponding to m first-type sampling points is determined based on at least one of the following pieces of information:
·A sequence consisting entirely of 1s;
·A first sequence;
·A partial sequence of the first sequence;
·First modulation information;
·A pseudo-random sequence of ±1.

The first sequence includes at least one of: a ZC sequence, a PN sequence, an m-sequence, or a Gold sequence. The first modulation information includes at least one of: QPSK modulation information, or QAM modulation information.

Illustratively, in a case where the data corresponding to m first-type sampling points is 1, the corresponding spectrogram and time-domain waveform diagram are shown in FIG. 11 and FIG. 12, or FIG. 14 and FIG. 15, which is not be elaborated further here.

Illustratively, the data corresponding to m first-type sampling points is determined based on a first sequence, where the first sequence is a randomized sequence, or alternatively, the first sequence is a pseudo-random sequence, and the first sequence includes at least one of: a ZC sequence, a PN sequence, an m-sequence, or a Gold sequence. FIG. 16 is a spectrum diagram where n is 64, m is 16, k is 2, and the data corresponding to the first-type sampling points is determined based on a ZC sequence. FIG. 17 is a time-domain waveform diagram obtained after performing an IFFT on the sampling points in the spectrum diagram corresponding to FIG. 16. In the case where the data corresponding to m first-type sampling points is determined based on a partial sequence of the first sequence, the obtained spectrum diagram and time-domain waveform diagram are similar to those of the first-type sampling points determined based on the first sequence, and is not further described here. The data values corresponding to the first-type sampling points are in one-to-one correspondence with the sequence elements in the first sequence.

Illustratively, the data corresponding to m first-type sampling points is determined based on first modulation information, where the first modulation information includes at least one of: QPSK modulation information, or QAM modulation information. FIG. 18 is a spectrum diagram where n is 64, m is 4, k is 2, and the data corresponding to the first-type sampling points is determined based on QPSK modulation information. FIG. 19 is a time-domain waveform diagram obtained after performing an IFFT on the sampling points in the spectrum diagram corresponding to FIG. 18.

Illustratively, the data corresponding to m first-type sampling points is determined based on a pseudo-random sequence of ±1. FIG. 20 is a spectrum diagram where n is 64, m is 4, k is 2, and the data corresponding to the first-type sampling points is determined based on a pseudo-random sequence of ±1. FIG. 21 is a time-domain waveform diagram obtained after performing an IFFT on the sampling points in the spectrum diagram corresponding to FIG. 20.

In summary, the apparatus according to the embodiments of the present disclosure performs randomization processing on frequency-domain information during the signal generation process, thereby ensuring the flattening of the time-domain waveform, avoiding signal distortion and saturation of the power amplifier, and facilitating signal transmission.

### Scheme 2: frequency-domain flattening.

Frequency-domain flattening may be understood as the randomization process applied to the frequency offset calibration signal during its generation. Optionally, the frequency offset calibration signal may be multiplied by a random sequence to obtain a randomized frequency offset calibration signal. The random sequence includes a plurality of random sequence elements, and these random sequence elements fall under at least one of the following scenarios.
·The plurality of random sequence elements are random.
·The random sequence elements corresponding to the time-domain sampling points within a single time-domain unit are the same, while the random sequence elements corresponding to the time-domain sampling points in different time-domain units are random.
·The random sequence elements corresponding to the time-domain sampling points within a single cycle are the same, while the random sequence elements corresponding to the time-domain sampling points in different cycles are random.
·The random sequence elements corresponding to the time-domain sampling points within a single time-domain unit are random, while the random sequence elements corresponding to the time-domain sampling points in different time-domain units are the same.
·The random sequence elements corresponding to the time-domain sampling points within a single cycle are random, while the random sequence elements corresponding to the time-domain sampling points in different cycles are the same.

In some embodiments, when multiplying the frequency offset calibration signal by the random sequence, the i^{th} time-domain sampling point is multiplied by the i^{th} random sequence element in the random sequence. For example, in a case where there are 4 time-domain sampling points with corresponding data {1, 0, 1, 0}, and the random sequence is {x₁, x₂, x₃, x₄}, a randomized result obtained after the multiplication is {x₁, 0, x₃, 0}.

In some embodiments, after randomizing the frequency offset calibration signal, the randomized frequency offset calibration signal is transmitted.

Illustratively, the random sequence elements corresponding to the time-domain sampling points within a single time-domain unit are the same, while the random sequence elements corresponding to the time-domain sampling points in different time-domain units are random. For example, the random sequence elements corresponding to the time-domain sampling points in the first time-domain unit are all 1, the random sequence elements corresponding to the time-domain sampling points in the second time-domain unit are all 2, and the random sequence elements corresponding to the time-domain sampling points in the third time-domain unit are all 3.

Illustratively, the random sequence elements corresponding to the time-domain sampling points within a single cycle are random, while the random sequence elements corresponding to the time-domain sampling points in different cycles are the same. For instance, the random sequence elements corresponding to the time-domain sampling points in different cycles are all "123456".

Upon receiving the frequency offset calibration signal that has undergone frequency-domain flattening, the second device may perform de-randomization processing on the frequency offset calibration signal. De-randomization processing involves multiplying the frequency offset calibration signal by conj(random sequence), where the conj() method may be used to obtain the conjugate value of the random sequence. The frequency offset calibration signal without randomization processing is denoted as A, and the random sequence is denoted as B. The result obtained after performing randomization processing on the frequency offset calibration signal is A*B. De-randomization is equivalent to A*B*conj(B). Since conj(B) is the conjugate value of B, B*conj(B) results in |B|², which is the square of the modulus of the random sequence. Therefore, the frequency offset calibration signal A without randomization processing can be calculated.

In summary, the apparatus according to the embodiments of the present disclosure performs randomization processing during the generation of frequency offset calibration signals, which can alleviate the concentrated spectral energy, flatten the spectral energy, and thereby enhance frequency selectivity and anti-interference capability.

It should be noted that the apparatus according to the above embodiments is exemplified solely based on the division of the aforementioned functional modules. In practical applications, the aforementioned functions can be allocated to different functional modules as needed, that is, the internal structure of the device can be divided into different functional modules to fulfill all or part of the functions described above.

Regarding the apparatus in the embodiments, the specific ways in which each module performs operations have been described in detail in the embodiments related to the method, and are not elaborated on here.

FIG. 26 is a structural schematic diagram of a wireless communication device (an AP or an STA) according to some exemplary embodiments of the present disclosure. A wireless communication device 700 includes a processor 701, a receiver 702, a transmitter 703, a memory 704, and a bus 705.

The processor 701 includes one or more processing cores, and the processor 801 executes various functional applications and information processing by running software programs and modules.

The receiver 702 and the transmitter 703 may be implemented as one transceiver 706, which may be a communication chip.

The memory 704 is connected to the processor 701 via the bus 705. The memory 704 may be configured to store computer programs, and the processor 701 is configured to execute these computer programs, thereby implementing the various steps performed by the ambient IoT device, terminal device, or network device in the aforementioned method embodiments. The transceiver 706 may include a transmitter and a receiver. The transmitter is configured to implement the steps or functions related to transmitting in the aforementioned method, while the receiver is configured to implement the steps or functions related to receiving. The processor 701 is configured to implement the remaining steps or functions other than transmitting and receiving.

In addition, the memory 704 may be implemented by any type of volatile or non-volatile storage device, or a combination thereof. The volatile or non-volatile storage devices include, but are not limited to: a random-access memory (RAM), a read-only memory (ROM), an erasable programmable ROM (EPROM), an electrically erasable programmable ROM (EEPROM), a flash memory, or other solid-state storage technologies, a compact disc ROM (CD-ROM), a digital video disc (DVD), or other optical storage, a magnetic tape cartridge, a magnetic tape, disk storage, or other magnetic storage devices.

The embodiments of the present disclosure also provide a computer-readable storage medium, in which a computer program is stored. The computer program is configured to be executed by the processor of an ambient IoT device, a terminal device, or a network device, to implement steps of the aforementioned method for calibrating frequency offset.

In some embodiments, the computer-readable storage medium may include: a ROM, a RAM, a solid state drive (SSD), or an optical disc, etc. Among them, the RAM may include a resistance RAM (ReRAM) and a dynamic RAM (DRAM).

The embodiments of the present disclosure further provide a chip, which includes a programmable logic circuit and/or one or more program instructions. The chip is configured to implement the method for calibrating frequency offset when runs on a terminal or network device.

The embodiments of the present disclosure also provide a computer program product or computer program, which includes one or more computer instructions stored in a computer-readable storage medium. The one or more computer instructions, when read from the computer-readable storage medium and executed by a processor of a terminal or network device, cause the processor to implement the aforementioned method for calibrating frequency offset.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

It should be understood that the frame formats and element formats illustrated in the embodiments of the present disclosure are exemplary cases. In different embodiments or designs, it is not excluded that at least one of the design aspects, such as the position of each field within the frame/element, the arrangement order with other fields, the number of bytes occupied, and the number of bits occupied, may change. The present disclosure does not impose any limitations on the specific formats of each frame and each element.

Described above are merely optional embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for calibrating frequency offset, performed by a first device, the method comprising:
generating a frequency offset calibration signal, wherein the frequency offset calibration signal comprises at least two sub-signals for frequency offset calibration; and each of the at least two sub-signals is a part of the frequency offset calibration signal, and the at least two sub-signals are the same; and
transmitting the frequency offset calibration signal to a second device.

2. The method according to claim 1, wherein the at least two sub-signals being the same comprises being the same in at least one of following aspects: a waveform; data; a length; a phase; a sequence used to generate the at least two sub-signals; or a formula used to generate the at least two sub-signals.

3. The method according to claim 1 or 2, wherein the at least two sub-signals comprise a first sub-signal and a second sub-signal; wherein
the first sub-signal and the second sub-signal are two consecutive parts of the frequency offset calibration signal; or
the first sub-signal and the second sub-signal are two partially overlapping parts of the frequency offset calibration signal.

4. The method according to any one of claims 1 to 3, wherein the at least two sub-signals use at least one of: an orthogonal frequency-division multiplexing (OFDM) waveform; a mixed waveform of an OFDM waveform and an on-off keying (OOK) waveform; a triangle waveform; a square waveform; or a pulse waveform.

5. The method according to any one of claims 1 to 4, wherein the frequency offset calibration signal is a periodic signal.

6. The method according to claim 5, wherein a time-domain unit comprises a plurality of cycles of the frequency offset calibration signal.

7. The method according to any one of claims 1 to 6, wherein:
each of the at least two sub-signals occupies a plurality of time-domain units in a time domain;
each of the at least two sub-signals occupies a time-domain unit in a time domain;
a duration occupied by each of the at least two sub-signals in a time domain is not a positive integer multiple of a time-domain unit; or
a duration occupied by each of the at least two sub-signals in a time domain is less than a time-domain unit.

8. The method according to any one of claims 1 to 7, wherein each of the at least two sub-signals comprises, in a time domain:
a cycle of the frequency offset calibration signal;
a plurality of cycles of the frequency offset calibration signal; or
a part of a cycle of the frequency offset calibration signal.

9. The method according to any one of claims 1 to 8, wherein an interval of a time-domain start position of each sub-signal among the at least two sub-signals is a positive integer multiple of a cycle.

10. The method according to any one of claims 1 to 9, wherein an interval of a time-domain start position of each sub-signal among the at least two sub-signals is less than a time-domain unit.

11. The method according to any one of claims 1 to 10, wherein the frequency offset calibration signal comprises n time-domain sampling points in a time-domain unit, and data corresponding to the n time-domain sampling points is obtained by performing an inverse fast Fourier transform (IFFT) on data corresponding to n frequency-domain sampling points.

12. The method according to claim 11, wherein the n frequency-domain sampling points comprise: m first-type sampling points with corresponding non-zero data; wherein an interval between any two adjacent first-type sampling points is the same and is equal to 2^{k} frequency-domain sampling intervals;
wherein m is a positive integer greater than or equal to 2, n is a positive integer greater than or equal to m, and k is a non-negative integer.

13. The method according to claim 12, wherein:
sampling point positions of the m first-type sampling points comprise at least one of a first frequency-domain sampling point or a last frequency-domain sampling point among the n frequency-domain sampling points; or
sampling point positions of the m first-type sampling points exclude at least one of a first frequency-domain sampling point or a last frequency-domain sampling point among the n frequency-domain sampling points.

14. The method according to claim 12, wherein:
sampling point positions of the m first-type sampling points are centralized positions of the n frequency-domain sampling points; or
sampling point positions of the m first-type sampling points are non-centralized positions of the n frequency-domain sampling points.

15. The method according to claim 12, wherein:
sampling point positions of the m first-type sampling points are symmetrical positions of the n frequency-domain sampling points; or
sampling point positions of the m first-type sampling points are asymmetrical positions of the n frequency-domain sampling points.

16. The method according to any one of claims 12 to 15, wherein the data corresponding to the m first-type sampling points is determined based on at least one of: a sequence consisting entirely of 1s; a first sequence; a partial sequence of a first sequence; first modulation information; or a pseudo-random sequence of ±1;
wherein the first sequence comprises at least one of: a Zadoff-Chu (ZC) sequence, a pseudo-random noise (PN) sequence, an m-sequence, or a Gold sequence; and the first modulation information includes at least one of: quadrature phase shift keying (QPSK) modulation information, or quadrature amplitude modulation (QAM) modulation information.

17. The method according to any one of claims 1 to 16, wherein transmitting the frequency offset calibration signal to the second device comprises:
obtaining a randomized frequency offset calibration signal by multiplying the frequency offset calibration signal by a random sequence; and
transmitting the randomized frequency offset calibration signal.

18. The method according to claim 17, wherein the random sequence comprises a plurality of random sequence elements, wherein
the plurality of random sequence elements are random;
random sequence elements corresponding to time-domain sampling points within a time-domain unit are the same, and random sequence elements corresponding to time-domain sampling points in different time-domain units are random;
random sequence elements corresponding to time-domain sampling points within a cycle are the same, and random sequence elements corresponding to time-domain sampling points in different cycles are random;
random sequence elements corresponding to time-domain sampling points within a time-domain unit are random, and random sequence elements corresponding to time-domain sampling points in different time-domain units are the same; or
random sequence elements corresponding to time-domain sampling points within a cycle are random, and random sequence elements corresponding to time-domain sampling points in different cycles are the same.

19. The method according to any one of claims 1 to 18, wherein:
the first device is a terminal device, and the second device is a network device; or
the first device is a network device, and the second device is a terminal device.

20. The method according to claim 19, wherein the terminal device uses a resistor-capacitor (RC) oscillator or an inductor-capacitor (LC) oscillator.

21. The method according to claim 19, wherein:
the network device is configured to calibrate a first frequency error using the at least two sub-signals, wherein the first frequency error is an error generated when the terminal device transmits an uplink signal, and the error comprises at least one of: an error caused by an error in an oscillator used by the terminal device, or an error generated during transmission of the uplink signal, the uplink signal comprising the at least two sub-signals; or,
the terminal device is configured to calibrate a second frequency error using the at least two sub-signals, wherein the second frequency error is an error generated when the terminal device receives a downlink signal, and the error comprises at least one of: an error caused by an error in an oscillator used by the terminal device, or an error generated during transmission of the downlink signal, the downlink signal comprising the at least two sub-signals.

22. A method for calibrating frequency offset, performed by a second device, the method comprising:
receiving a frequency offset calibration signal transmitted by a first device, wherein the frequency offset calibration signal comprises at least two sub-signals for frequency offset calibration; and each of the at least two sub-signals is a part of the frequency offset calibration signal, and the at least two sub-signals are the same when being transmitted.

23. The method according to claim 22, wherein the at least two sub-signals being the same comprises being the same in at least one of following aspects: a waveform; data; a length; a phase; a sequence used to generate the at least two sub-signals; or a formula used to generate the at least two sub-signals.

24. The method according to claim 22 or 23, wherein the at least two sub-signals comprise a first sub-signal and a second sub-signal;
the first sub-signal and the second sub-signal are two consecutive parts of the frequency offset calibration signal; or
the first sub-signal and the second sub-signal are two partially overlapping parts of the frequency offset calibration signal.

25. The method according to any one of claims 22 to 24, wherein the at least two sub-signals use at least one of: an orthogonal frequency-division multiplexing (OFDM) waveform; a mixed waveform of an OFMD waveform and an on-off keying (OOK) waveform; a triangle waveform; a square waveform; or a pulse waveform.

26. The method according to any one of claims 22 to 25, wherein the frequency offset calibration signal is a periodic signal.

27. The method according to claim 26, wherein a time-domain unit comprises a plurality of cycles of the frequency offset calibration signal.

28. The method according to any one of claims 22 to 27, wherein:
each of the at least two sub-signals occupies a plurality of time-domain units in a time domain;
each of the at least two sub-signals occupies a time-domain unit in a time domain;
a duration occupied by each of the at least two sub-signals in a time domain is not a positive integer multiple of a time-domain unit; or
a duration occupied by each of the at least two sub-signals in a time domain is less than a time-domain unit.

29. The method according to any one of claims 22 to 28, wherein each of the at least two sub-signals comprises, in a time domain:
a cycle of the frequency offset calibration signal;
a plurality of cycles of the frequency offset calibration signal; or
a part of a cycle of the frequency offset calibration signal.

30. The method according to any one of claims 22 to 29, wherein an interval of a time-domain start position of each sub-signal among the at least two sub-signals is a positive integer multiple of a cycle.

31. The method according to any one of claims 22 to 30, wherein an interval of a time-domain start position of each sub-signal among the at least two sub-signals is less than a time-domain unit.

32. The method according to any one of claims 22 to 31, wherein the frequency offset calibration signal comprises n time-domain sampling points in a time-domain unit, and data corresponding to the n time-domain sampling points is obtained by performing an inverse fast Fourier transform (IFFT) on data corresponding to n frequency-domain sampling points.

33. The method according to claim 32, wherein the n frequency-domain sampling points comprise: m first-type sampling points with corresponding non-zero data; wherein an interval between any two adjacent first-type sampling points is the same and is equal to 2^{k} frequency-domain sampling intervals;
wherein m is a positive integer greater than or equal to 2, n is a positive integer greater than or equal to m, and k is a non-negative integer.

34. The method according to claim 33, wherein:
sampling point positions of the m first-type sampling points comprise at least one of a first frequency-domain sampling point or a last frequency-domain sampling point among the n frequency-domain sampling points; or
sampling point positions of the m first-type sampling points exclude at least one of a first frequency-domain sampling point or a last frequency-domain sampling point among the n frequency-domain sampling points.

35. The method according to claim 33, wherein:
sampling point positions of the m first-type sampling points are centralized positions of the n frequency-domain sampling points; or
sampling point positions of the m first-type sampling points are non-centralized positions of the n frequency-domain sampling points.

36. The method according to claim 33, wherein:
sampling point positions of the m first-type sampling points are symmetrical positions of the n frequency-domain sampling points; or
sampling point positions of the m first-type sampling points are asymmetrical positions of the n frequency-domain sampling points.

37. The method according to any one of claims 32 to 36, wherein the data corresponding to the m first-type sampling points is determined based on at least one of: a sequence consisting entirely of 1s; a first sequence; a partial sequence of a first sequence; first modulation information; or a pseudo-random sequence of ±1;
wherein the first sequence comprises at least one of: a Zadoff-Chu (ZC) sequence, a pseudo-random noise (PN) sequence, an m-sequence, or a Gold sequence; and the first modulation information includes at least one of: quadrature phase shift keying (QPSK) modulation information, or quadrature amplitude modulation (QAM) modulation information.

38. The method according to any one of claims 22 to 37, wherein receiving the frequency offset calibration signal transmitted by the first device comprises:
receiving a randomized frequency offset calibration signal transmitted by the first device, wherein the randomized frequency offset calibration signal is obtained by multiplying the frequency offset calibration signal with a random sequence.

39. The method according to claim 28, wherein the random sequence comprises a plurality of random sequence elements, wherein
the plurality of random sequence elements are random;
random sequence elements corresponding to time-domain sampling points within a time-domain unit are the same, and random sequence elements corresponding to time-domain sampling points in different time-domain units are random;
random sequence elements corresponding to time-domain sampling points within a cycle are the same, and random sequence elements corresponding to time-domain sampling points in different cycles are random;
random sequence elements corresponding to time-domain sampling points within a time-domain unit are random, and random sequence elements corresponding to time-domain sampling points in different time-domain units are the same; or
random sequence elements corresponding to time-domain sampling points within a cycle are random, and random sequence elements corresponding to time-domain sampling points in different cycles are the same.

40. The method according to any one of claims 22 to 39, further comprising:
performing frequency offset calibration based on the frequency offset calibration signal.

41. The method according to any one of claims 22 to 39, wherein:
the first device is a terminal device, and the second device is a network device; or
the first device is a network device, and the second device is a terminal device.

42. The method according to claim 41, wherein the terminal device uses a resistor-capacitor (RC) oscillator or an inductor-capacitor (LC) oscillator.

43. The method according to any one of claims 40 to 42, wherein performing the frequency offset calibration based on the frequency offset calibration signal comprises:
calibrating, by a network device, a first frequency error using the at least two sub-signals, wherein the first frequency error is an error generated when a terminal device transmits an uplink signal, and the error comprises at least one of: an error caused by an error in an oscillator used by the terminal device, or an error generated during transmission of the uplink signal, the uplink signal comprising the at least two sub-signals; or,
calibrating, by a terminal device, a second frequency error using the at least two sub-signals, wherein the second frequency error is an error generated when the terminal device receives a downlink signal, and the error comprises at least one of: an error caused by an error in an oscillator used by the terminal device, or an error generated during transmission of the downlink signal, the downlink signal comprising the at least two sub-signals.

44. An apparatus for calibrating frequency offset, comprising:
a generation module, configured to generate a frequency offset calibration signal, wherein the frequency offset calibration signal comprises at least two sub-signals for frequency offset calibration; and each of the at least two sub-signals is a part of the frequency offset calibration signal, and the at least two sub-signals are the same; and
a transmitting module, configured to transmit the frequency offset calibration signal to a second device.

45. An apparatus for calibrating frequency offset, comprising:
a receiving module, configured to receive a frequency offset calibration signal transmitted by a first device, wherein the frequency offset calibration signal comprises at least two sub-signals for frequency offset calibration; and each of the at least two sub-signals is a part of the frequency offset calibration signal, and the at least two sub-signals are the same when being transmitted.

46. A computer-readable storage medium, storing a computer program that, when executed by a processor, cause the processor to perform the method for calibrating frequency offset according to any one of claims 1 to 21, or the method for calibrating frequency offset according to any one of claims 22 to 43.

47. A chip, comprising a programmable logic circuit and/or one or more program instructions, wherein the chip, when operates, is configured to implement the method for calibrating frequency offset according to any one of claims 1 to 21, or the method for calibrating frequency offset according to any one of claims 22 to 43.

48. A computer program product or computer program, comprising one or more computer instructions stored in a computer-readable storage medium, wherein the one or more computer instructions, when read from the computer-readable storage medium and executed by a processor, cause the processor to perform the method for calibrating frequency offset according to any one of claims 1 to 21, or the method for calibrating frequency offset according to any one of claims 22 to 43.
